(19) **Europäisches Patentamt**
**European Patent Office**
**Office européen des brevets**

(11) **EP 1 870 615 A2**

(12) # EUROPEAN PATENT APPLICATION

(43) Date of publication:
**26.12.2007 Bulletin 2007/52**

(51) Int Cl.:
**F16H 39/28** (2006.01)    **F16H 9/08** (2006.01)
**F16H 15/52** (2006.01)    **F16H 39/34** (2006.01)
**F16H 15/20** (2006.01)

(21) Application number: **06380257.3**

(22) Date of filing: **27.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.09.2005 ES 200502419**

(71) Applicant: **Molano Gonzáles, Manuel**
**10004 Cáceres (ES)**

(72) Inventor: **Molano Gonzáles, Manuel**
**10004 Cáceres (ES)**

(54) **Converter of power, automatic, that, with minimum consumption of energy and with a continuous progressive and instantaneous adaptation maintains constant the equality between the power generated by a source of energy and the power needed, in each instant, by a specific appliance**

(57)     A TRANSMISSION (I) [ADAPTOR (II), REGULATOR (III)] which "connects" the POWER SOURCE with the APPLICATION.

(II) adapts the entrance POWER SOURCE, when eatiting, to the needs of the APPLICATION through "leverages' equivalence" (modifying the levers, forces) and gearing down processes; keeping:

MOTIVE FORCE = RESISTANT POWER (I).

(III) produces the "connection" adapted in (II), according to (teamed and synchronised) to the relationships of the pressures (1) plus rotation speeds (2), FORCES:

(1) motive force (8) / resistant pressure (9),
(2) driving shaft's rotation speeds (14) / resistant shaft (15); keeping (I).

(8) (figs. 8 and 9), motive fluid, going through (7)-(3), makes (1) turn, symbiotic with (11), resistance.

When varying (11), (III) moves (7), (8) makes (1) turn, another moment equivalent by the modification of the lever, rotation speed, occurs: (I) being maintained.

Useful application: cycles, motorcycles, automobiles, power-tools.

Fig. 1

EP 1 870 615 A2

**Description**

**TECHNIQUE'S SECTOR**

The present invention corresponds to the technical TRANSMISION sector, and the problems caused by its practical carrying out process, of every ENERGY SOURCE to a SPECIFIC APPLICATION.

**PURPOSE OF THE INVENTION**

The purpose of this invention is:

1. Applying the economic concept of the relationship between capital/product:

OPTIMISE the relationship between ENERGY SOURCE / SPECIFIC APPLICATION

2. Applying the concept of comfort: AUTOMATISM.

Two obstacles oppose to the OPTIMISATION in the relationship between ENERGY SOURCE / SPECIFIC APPLICATION:
1°. Exceptionally, an ENERGY SOUCE can be applied DIRECTLY to a SPECIFIC APPLICATION.
2°. With high frequency, the POWER required by a SPECIFIC APPLICATION is VARIABLE and UNPREDICTABLE in time.

| ENERGY SOURCE OR POWER | TRANSMISSION ADAPTOR | SPECIFIC APPLICATION |
|---|---|---|
| River (potential energy) | Mill's vertical Wheel blade | Move mill's stone |
| River (kinetic energy) | Hydraulic mill's wheel | Move mill's stone |
| Wind (kinetic energy) | Wind mill's blades | Move mill's stone |
| **MOTIVE FORCE** | **POWER CONVERTER** | **RESISTANT POWER** |

In order to solve the FIRST case a devise is INTERPOSED between the SOURCE POWER and the SPECIFIC APPLICATION, the so-called **TRANSMISSION;** and, in order to solve the SECOND case, a devise is used to try to **adequate** and **regulate** the input of the SOURCE POWER in the output to the needs required by the SPECIFIC APPLICATION: an **ADAPTOR.**
The transmissions, when the needs required by a SPECIFIC APPLICATION are fixed, constant and invariable in time, work as connectors between the SOURCE POWER and the SPECIFIC APPLICATION. However, the transmissions, apart from inserted connectors, when the needs required by the SPECIFIC APPLICATION are variable and UNPREDICTABLE in time, are devises that ADAPT the SOURCE to the APPLICATION **modifying the rotation relationship between them**; that is, between the rotation that it receives (input) and the one that it transmits (output).
According to this rotation relationship, the transmissions can be:

a. VARIABLE. The ones modifying the input/output rotation relationship.
At the same time, depending on the way they vary this relationship, they can be:

1. VARIABLE **with discrete intervals**, as in the case of automobiles or any other power-tools.
They produce connections with fixed rotation relationships without movements. Their disadvantage is that, as they do not produce a **continuous, progressive and instantaneous** adaptation in the input/output relationship they do not get an OPTIMISATION, with efficiency loss and superfluous energy waste.

2. VARIABLE **without discrete intervals**, which produce an OPTIMUM input/output relationship; but they can have MOVEMENT in their connections.

b. CONSTANT. They connect the SOURCE with the APPLICATION in a fixed way, with no variation in the input/output relationship.

The present invention solves and optimises the two **obstacles** exposed at the beginning in the relationship between the SOURCE POWER / SPECIFIC APPLICATION. For that reason it works as TRANSMISSION and power ADAPTOR in order to keep CONSTANT the equation between MOTIVE FORCE = INSTANTANEOUS RESISTANT POWER (1), as the optimum relationship SOURCE POWER / SPECIFIC APPLICATION requires. This OPTIMUM relationship of the SOURCE POWER/SPECIFIC RELATIONSHIP, adjusting to both concepts, the economic concept and the comfort concept, objects of this invention, is possible with the AUTOMATIC CONNECTION REGULATOR (III), which, with a teamed **and synchronised function of the pressure relationships plus rotary speed, that is, POWER:**

> **Motor pressure** (8) (VM = MOTOR LEVERAGE) / **resistant pressure** (9) **(RM** = RESISTANT LEVERAGE)
> **Driving shaft rotary speed** (14) / **resistant shaft** (15),

produces the adequate connection at all times in the AUTOMATIC CONNECTION ADAPTOR (II) in order to keep constant the equation MOTORY POWER = RESISTANT POWER, according to the different realisation modes. Converting, in an automatic instantaneous way, the MOTORY POWER which receives (input) from the POWER SOURCE, by means of gearing down and gearing up in the input/output rotary relationship and without wasting power or energy, in exactly the minimum OUTPUT POWER strictly required by the SPECIFIC APPLICATION in every moment, which means an optimisation, both in the performance and in the energy consumption.
(1). It is understood by INSTANTENOUS RESISTANT POWER the product from the RESISTANT LEVERAGE by the ROTATION SPEED which a SPECIFIC APPLICATION opposes to a ENERGY SOURCE every moment.

ANTECEDENTS OF THE INVENTION

Among the transmission traditional devices in order to get the **"leverage conversion"** are the **leverage converters,** which, at the same time, can be divided into two categories: **leverage mechanical converters and leverage hydraulic converters.**
The leverage mechanical converters or gearbox, either movable or planetary, gear down the input rotation, that is, they relate the input rotation with the output rotation at discrete intervals ("steps"), 4 or 6 pinions combinations. This makes it difficult for them to reach the optimum rotation relationship (input/output), to lose motor efficiency and a superfluous waste of energy when adapting the motor leverage to the resistant leverage in "STEPS" and in a DISCONTINUOUS way, NOT CONSTANT and AUTOMATIC.
In a similar way, the hydraulic leverage converters, even with their undutiful advantages concerning the mechanical converters, as it is their comfort, lack of a low amplitude leverage variation (in practice the gearing down does not go beyond 2 or 3), of great heating of the liquid and a bigger consumption of fuel (around 20 % or over). Due to their low leverage amplitude, they require, also, the addition of a planetary gearing box, and due to the fact that they need great power, they need powerful engines.
There are also other similar devices that are variable transmission systems and without discrete intervals. However, they are not very sensitive in the detection and instantaneous response of the relative variations of the motor and resistant leverages, therefore the equation between both leverages is not instantaneous and constant Due to the fact that they base their regulation exclusively in function of the relationship between the motor shaft rotary speed/ transmission shaft (resistant), instead of the relationship between MOTIVE FORCE/RESISTANT POWER **(motive pressure product x motive rotary speed / resistant pressure product x resistant rotary speed).** Apart from that its transmission is based on mechanical connections, which are rigid, without contemplating the hydraulic option, which is more elastic and versatile and with a rapid precise response.

EXPLANATION OF THE INVENTION

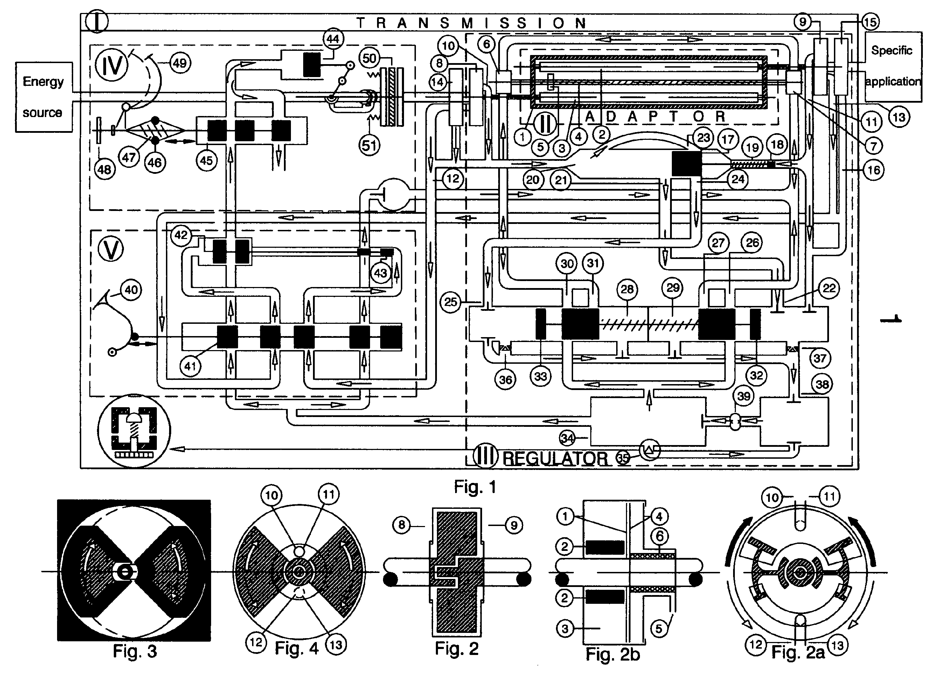

In synthesis, the invention explained here is focused on the TRANSMISSION (**I**) of the following scheme that is detailed below, according to **Figure 1**, composed by four automatic devices **[(II)**, (**III**), (**IV**) and (**V**)]**, which, functioning in a complementary and synchronising way:

1. Keep constant the equation between MOTIVE FORCE = RESISTANT POWER.
2. Minimum energy consumption, when producing, adapting and transmitting only the minimum required MOTIVE FORCE by the SPECIFIC APPLICATION every moment.
3. A high amplitude leverage variation.
4. Optimisation of the motive performance, when allowing the engine to always work at the regime speed
5. Comfort due to total automisation.

| (I) TRANSMISSION | | |
|---|---|---|
| POWER | (IV) AUTOMATIC AND/OR MANUAL REGULATOR TO PUT DOWN THE CLUTCH OR TO RAISE THE CLUTCH | (II) CONNECTION AUTOMATIC ADAPTOR | SPECIFIC |
| SOURCE | (V) "BRAKE" AUTOMATIC DEVICE AND ANTI- STALL ENGINE | (III) CONNECTION AUTOMATIC REGULATOR | APPLICATION |

(II) THE ADAPTOR is composed, according to the graphic drawings, by different pieces and elements, arranged in a housing, and whose disposition and functioning are described in the carrying out process detailed in the correspondent section. The integrating elements are, among others, cylinders, discs, cones, etc. in diverse combination, "connected" among them by other elements which, all together, interact physically, according to concrete realisations, in order to adapt the MOTIVE FORCE to the RESISTANT POWER, reducing the motor effort and to transmit in their output the same power that they receive. The screw-axle (4), ruled by the REGULATOR (III), is likely to be substituted by a hydraulic-telescopic device as to send orders to the connector (5).

(III) THE AUTOMATIC CONNECTION REGULATOR conforms a cylinder device, butting and valves, according to FIGURE 1, which detects, gathers and transmits any minimum pressure variation (effort) at the input and output of the ADAPTOR (II), and rules this to modify the **connections and interactions** of its elements and therefore to reach its purpose: **equation**

$$\text{MOTIVE FORCE} = \text{RESISTANT POWER. (V)}$$

Detects and compares both forces, motive and resistant, which the ADAPTOR receives, and, in function of the slightest variation between both forces, it performs and modifies the connections and interactions of the elements of the ADAPTOR in order to keep constant and continuously equal the input and output POWER. This REGULATOR (III) is also likely to cany out its specific function, changing this way, almost all its components, mechanical and hydraulic, specially the detection components (8)-(9) and (14)-(15), in Fig. 1, and detailed in Figs. 2a and 2b, by electronic elements. In order to keep the equation MOTIVE FORCE = RESISTANT POWER (**V**), [or, what is the same: **MM x VM = MR x VR (I)**] it is necessary for the POWER SOURCE and the SPECIFIC APPLICATION to be "connected" (D) in the ADAPTOR in the precise spot by means of (5). Once balance is achieved (**I**), and as long as there is no relative variation in the position of the related elements, it will stay invariable. Within this balance is the pressure equation **Mm x VM = Mr x VR** (II) which the MOTIVE FORCE and the RESISTANT POWER apply in the valve's ends, (32) and (33), through (8) plus (14) and (9) plus (15), respectively. This way, as long as equation stays (I), equation (II) will also stay (II), with the valve centred and (26), (27), (30) and (31) closed.

NOTES:

**1.** These equations (**I**) and (**V**) are identical; different expressions of the same concept. Therefore, from now on, they will be used indistinctively.
**2. MM x VM = MR x VR (I)**: motive moment x motive rotation = resistant moment x 25 resistant rotation (See **Figs. A, B, C, D, E, F, G and H**).
**3. VM**: with superimposed arrow (→), motor leverage; without it, **motor rotation** (**Figs. A, B, C** and **D**).
**4. VR**: with superimposed arrow (→), motor leverage; without it, resistant rotation. (**Figs. E, F**).
**5. Mm x VM = Mr x VR** (II): see **a**. and **c**. in **D** section).

**A**. But at some point, resistance increases; the balance breaks (I) and a chain of variations in (I):

**1.** increase the resistant moment (MR) and decrease rotation (VR) in (2).
**2.** "Decrease" the motor moment (MM) [in the relationship with (2), which is the one varying] and the rotation decreases (VM) in (3).

As a result, there is an imbalance: **factors in (I) vary**.
**B.** In order to re-establish the balance the "connection" between (2) and (3) has to be modified through (5), as to proportionally increase the motive moment (MM) by means of GEARING DOWN in the leverage (motor), which increases its rotation at a regime speed, and **RE-ESTABLISHES** then the equation (**I**).
**C.** If, instead of increasing resistance, this resistance decreases, the process would be similar in order to reach equation (I).
**D.** This "connection", depending on every concrete realisation of the ADAPTOR (II), can be a variation of the relative position between the elements that integrate it. And it is this "connection" the one making possible the **re -establishment and maintenance** of the equation (I), controlled by the REGULATOR (III) by means of the pressure equation (II), which is basically proportional to (I):

$$\textbf{Mm x VM = Mr x VR}$$

and where:

**a. Mm** is the leverage moment or pressure that the engine generates in the hydraulic connection (8), transmits through (10) in Figs. 4 and 2a and exerts in (33).
**b.** The device (14), symbiotic with the driving shafts, and in function of VM, generates a centrifuged power that is transmitted as proportional pressure in (33).
**c. Mr** is the leverage moment or pressure that resistance generated in the hydraulic connection (9), transmits through (11) in Figs. 4 and 2a and exerts in (32).
**d.** The device (15), symbiotic with the power shaft, and in function of VR, generates a centrifuged power that is transmitted as proportional pressure in (32).

As the homologue terms of equation (I) and its proportionality Mm x VM = Mr x VR (II) are proportional among them, and (II) is always a consequence of (I), any variation of the terms of (I) determine the breaking off and the imbalance of (II).

**This inter-relationship and inter-dependency between (I) and (II) are used, by means of the reciprocal interaction between (I) and (II), to keep constant the EQUATION (I), which is the NUCLEUS, the FINALITY, of the present invention, since the rest is no more than just the MEANS to achieve it. Moreover, the interaction between (I) and (II) works as follows:**

An increase on the resistance, MR, in (I) produces the variations seen in section A, but these variations of (I) produce the correspondent proportional variations in their homologue in (II). This makes pressure in (32) higher, obliging it to move to the left, therefore pressure in (34) goes through (26) and performs in (7), which, at the same time, moves (5) to "connect" (2) and (3) in the **adequate** point and **re-establishes** the equation (I), and, as a consequence, (II) is also re-established as seen in section **B**.

If the case of section **C**, the process is similar occurs:

The proportional pressure increases in (33), which moves to the right and gives way to (34) through (30) and performs in (6) in order to move (5) and "connect" (2) and (3) at the adequate point and re-establish again the equations (I) and (II).

Apart from that, another two devices are arranged, which complete the REGULATOR (III), refining its functioning, precision and efficiency: (**IV**) and (**V**):

(IV) THE AUTOMATIC AND/OR MANUAL REGULATOR TO PUT DOWN THE CLUTCH AND TO RELEASE THE CLUTCH, which, as it is indicated, functions as an automatic to put down the clutch, but also as a traditional to put down the clutch ruled by human will, and whose use is optional.

(V) THE "BRAKE" AND ANTI-STALL ENGINE DEVICE, which acts as "engine brake" and avoids at one stage the engine to stall when the RESISTANT POWER is higher than the MOTIVE FORCE, as happens when braking, and keeps connected the POWER SOURCE with the APPLICATION by means of putting down the clutch, avoiding the engine to be "free revving".

Although the effect called "engine brake", due to passive resistances (gears, chains, camshaft, valves, voids, cylinders, etc.), is a negative constant, however, this factor has a positive effect when it is used and it is increased to help the brakes. In order for it to be useful when applying to the brakes, the following must be avoided:

**a.** Avoid the engine to stall.
**b.** Avoid the engine to put down the clutch.
**c.** Increase the "engine brake" effect.

When stopping, the following occur:

**1.** The accelerator is released.
**2.** The rotation engine falls... until it reaches ticking over.
**3.** The progressive pressure decreases in (8) and (9).
**4.** The regressive pressure increases in (8) and (9).
**5.** The terms are inverted (inertia makes the engine work); that is:

**A.** THE POWER SOURCE (8) becomes "SPECIFIC APPLICATION" (RESISTANCE).
**B.** THE SPECIFIC APPLICATION (9) becomes "POWER SOURCE" (MOTIVE-INERTIA).

When slowing down (with release of the accelerator), and taking into consideration points 1 to 5, (41) it moves to the left and gives way to:

**A.** (POWER SOURCE), which performs in (43) and moves to the left and gives way to (34), which through (7) moves the "connection" (5) to the left as much as possible to create a resistance source B.; that is, bigger "engine brake" effect

**B.** (APPLICATION), which works in (42), but that, due to the proportional relationship previously calculated of the diameters of the pistons (42) and (43), will only be moved to the right when the inertia gets to such a low point that it can not "push" the engine in order to give way to (34) and (44) and to release the clutch, avoiding the engine to stall. This happens when the movement speed is very low (and inertia very weak) and the brake is now able to stop.

As long as the accelerator is activated (41) its steps are blocked.

From the disposition, functioning and complementation of these devices it can be concluded that every moment the engine will only produce the minimum power, strictly necessary, required by the APPLICATION, this being a product of strange conditions to human will or not. In addition, these devices allow the engine to always work at its regime speed, therefore its performance and energy consumption are optimised.

Explanation of Figs. **A, B, C, D, C+D, E, F, E+F, G** and **H**:
» Fig. **A** represents what a POWER SOURCE generates (engine):

**1.** The group of possible and "successive" energies, and **exactly the same**:

FM= {F, F, ..., F, F}. But FM = {F} (unitary group since F is **invariable**, unique).

**2.** The group of possible and "successive" MOTOR LEVERAGES, and **exactly the same**:

VM = {V, V, ... V, V}. But VM = {V} (unitary group since V is **invariable**, unique).

The motor leverage lever is a constant and depends on the fixed dimension of the crankshaft arm.
Due to the **"leverage equivalence"**. Fig. **A** generates Figs. **B, C** and **D**. And from Figs. **C** and **D** Fig. **C+D** are obtained.

» Fig. **E** represents what the SPECIFIC APPLICATION generates from a POWER SOURCE:

**1. The group of possible and successive** RESISTANT ENERGIES; **all of them different (1)**:

$FR = (F_0, F_1, F_2, ... , F_{n-2}, F_{n-1}, F_n\} \Rightarrow F_0 < F_1 < F_2 <, ... , < F_{n-2} < F_{n-1} < F_n.$

**2.** The group of possible and successive RESISTANT LEVERAGES; all of them different (1):

$VR = \{V_0, V_1, V_2, ..., V_{n-2}, V_{n-1}, V_n\} \Rightarrow V_0 < V_1 < V_2, <, ... , < V_{n-2} < V_{n-1} < V_n.$ Through the "equivalent leverage"
Fig. **E** goes to Fig. **F.** And from both figures Fig. **E+F** is obtained.

**(1)** Although the RESISTANT LEVER is **invariable**, the RESISTANT ENERGIES **are all different among them.**
» Fig. **G** expresses the synthesis of Figs. **A, B, C, D, E** and **F**, which is the relationship between a POWER SOURCE
and its APPLICATION, through TRANSMISSION, and which is explained in the following scheme:

| MOTOR LEVERAGE | X | ROTATION SPEED | = | RESISTANT LEVERAGE | X | ROTATION SPEED |
|---|---|---|---|---|---|---|
| VM (motor leverage) | X | ROTAT. SPEED (gearing down) | = | VR (resistant leverage) | X | ROTAT. SPEED (gearing down) |
| **MOTIVE FORCE** | | | = | **RESISTANT POWER** | | |

Lastly, and taking into consideration the correspondence between POWER LEVERAGE and LEVERAGE MOMENT,
Fig. **H** expresses schematically the behaviour of the SOURCE and the SPECIFIC APPLICATION and how they have
to relate (adapt) among them the respective LEVERAGE MOMENTS in order to keep constant the equation MOTIVE
FORCE = RESISTANCE POWER: through the gearing down of the rotation motor.
» **MM** is the group of possible and "successive" MOTOR LEVERAGE MOMENTS, and **similar** among them:

MM = {M, M, M, ..., M, M, M}. But MM = {M} (unitary group since M is **invariable**, unique).

» **MR** is the group of possible "successive" RESISTANT LEVERAGE MOMENTS; **all of them different**:

$MR = \{M_0, M_1, M_2, ..., M_{n-2}, M_{n-1}, M_n\} \Rightarrow M_0 < M_1 < M_2 <...< M_{n-2} < M_{n-1} < M_n$

In the figure, it can be noticed that:

1. The group of MOTOR LEVERAGE MOMENTS (MM) covers the area of the **ABFG** rectangle.
2. The group of RESISTANT LEVERAGE MOMENTS (MR) covers the area of the **ACD** triangle.
3. The GEARING UP of the MOTOR LEVERAGE MOMENT (actually it is achieved by gearing down the rotation
motor) has to be directly proportional to the MR / MM quotient.
4. The GEARING UP of the MOTOR LEVERAGE MOMENT (that is, the gearing down of the rotation motor) occurs
when the quotient MR / MM > MM, and the gearing down of the MOTOR LEVERAGE MOMENT (actually the
transmission power shaft rotation is geared up) when MR / MM < MM. That is to say, in the **ACJI** and **BI JD** areas, respectively.

The problem lies in how to sort out every moment, without discontinuity, the RESISTANCE MOMENT, concrete and different every moment, which a SPECIFIC APPLICATION opposes, unpredictably, from the group MR = $\{M_0, M_1, M_2, ..., M_{n-2}, M_{n-1}, M_n\}$.

The solution would be easy if the POWER SOURCE produced and opposed every moment the MOTOR LEVERAGE MOMENT, adequate, concrete and different, which could overcome the correspondent RESISTANT LEVERAGE MOMENT produced by the SPECIFIC APPLICATION.

However, as the POWER SOURCE produces in a continuous way only a **fixed** LEVERAGE MOMENT, the only way to overcome the RESISTANT LEVERAGE MOMENT with the fixed MOTOR LEVERAGE MOMENT, is to GEAR this UP (gearing down the rotation motor):

$$\textbf{v x MOTOR LEVERAGE} \qquad \text{(I) } \mathbf{v =} \textbf{ rotation speed}$$

But the expression (I) is another level; It is the concept (II), that is, **POWER,** since:

$$\textbf{v x MOTOR LEVERAGE} = \textbf{MOTIVE FORCE} \qquad \text{(II)}$$

And as the RESISTANT LEVERAGE is opposed to (II), it can be deduced that:

$$\textbf{MOTIVE FORCE} = \textbf{RESISTANT POWER...} \qquad \text{(III)}$$

Nevertheless (III) is also POWER since all variation in the driving shaft rotation modifies the transmission shift rotation. And from (II) and (III), it implies that:

$$\textbf{(1) v x MOTOR LEVERAGE} = \textbf{\textit{v} x RESISTANT LEVERAGE} \qquad \text{(IV)}$$

What has been said in (I), and substituting the two members of (IV):

$$\boxed{\textbf{MOTIVE FORCE } = \textbf{RESISTANT POWER} \quad \text{(V)}}$$

Therefore, the "inconstancy" of the SPECIFIC APPLICATION, which generates at all times one of the MOMENTS of the MR group, which originates the correspondent unpredictable RESISTANT POWER, the problems is reduced to keeping constant every moment the equation (V).

If the physical devices used to adapt a POWER SOURCE to the correspondent SPECIFIC APPLICATION can not keep constant and without discontinuity the equation (V) the system is not efficient in performance and energy consumption.

The level of efficiency of a TRANSMISSION, as a device adapting a POWER SOURCE to the needs of changing and unpredictable demands of a SPECIFIC APPLICATION, is a function of its sensitiveness and capacity to give adequate answer to every single demand that APPLICATION might present, with the minimum possible energy consumption. And that ADAPTATION can only be achieved through the GEARING UP of the respective LEVERAGE MOMENTS (gearing down the rotation motor) which occur (opposed) between the POWER SOURCE and its SPECIFIC APPLICATION.

The traditional gearbox responds to almost unlimited demands of the SPECIFIC APPLICATION (resistance) with just a few limited "steps", 4 or 6 gearing down / (gearing up). Even the hydraulic leverage , with its advantages in efficiency and commodity, continues giving an answer in "steps" of limited gearing down / (gearing up).

On the contrary, the invention here described, by means of a hydraulic and mechanical device, ADAPTS **constant and automatically and with no solution of continuity** (2), the GEARING UP / GEARING DOWN of the MOTOR AND RESISTANT LEVERAGE MOMENTS in order to give an instantaneous and adequate answer to every, almost unlimited and unpredictable demands of the SPECIFIC APPLICATION, keeping this way constant the **equation (V)**, and with it, the OPTIMISATION in performance, economy and commodity.

(1) The speed $v$ is the transmission rotation shaft speed. Both speeds, the motor driving shaft and the transmission shaft (v and $v$), are inversely proportional.

(1) As it is detailed in the REALISATION section.

**Finally, the explanation that precedes is synthesised in Fig. 1 as follows:**

Starting from the engine ticking over, where (44) keeps it with the clutch released (50) by the action of (34).

When accelerating, (40) cuts (34) in (41), (51) overcomes (44), and (50) transmits the POWER SOURCE, through the hydraulic connection (8), the ADAPTOR (II) and the connection (9), to the SPECIFIC APPLICATION.

At the beginning of the acceleration, the pressures (8) and (14), due to the difference calculated from (17) and (18) [it is meant to retard the opening of (23)], do not go past (23) to (33), but through (22) to affect in (32) and create this way a strong "reprise":

(34) it performs in (7), and (5) is taken to "connect" (2) and (3) at a
point where high power is created to overcome inertia.

Therefore, when the ascending pressures (9) and (15) overcome (19), the precisions (a), [(8)-(14)] and [(9)-(15)], affect (33) and (32), respectively. And from now on, any difference in the pressures (a) that affect (32) and (33), make (34) perform in (7) or (8) in order to take (5) to the "connection" point between (2) and (3) where the equation MOTIVE FORCE = RESISTANT POWER is achieved; keeping constant the equation of pressures in (32) and (33) and the **equation** of the two FORCES, since both equalities are interdependent and tend to get generated mutually.

**(a)** These pressures, [(8)-(14)] and [(9)-(15)], are directly proportional to the driving shaft rotation and to the motive force, and the transmission shaft and the resistant power, respectively.

**DESCRIPTION OF THE DRAWINGS**

**FIGS. A, B, C,** and **C** + **D**.

> **(bm)**: Motor leverage lever or crankshaft arm.

> **(bp) :** Lever.

> **V** (with superimposed arrow →): Motor leverage.

> **VM** (with an arrow →): Group of possible and "successive" MOTOR LEVERAGES, exactly the same, produced by the SPECIFIC APPLICATION of a POWER SOURCE.

**FIGS. E, F,** and **E** + **F**.

>**VR** (→): Group of possible successive RESISTANT LEVERAGES, all of them different, produced by the SPECIFIC APPLICATION of a POWER SOURCE.

**FIG. G.**

**(1):** Driving shaft.

**(2):** Transmission shaft.

This figure corresponds schematically with **FIGURE 1**.

**FIG. H**

**(1):** Driving shaft.

**(2):** Transmission shaft.

> **MM** (with superimposed arrow →): possible and "successive" MOTOR LEVERAGE MOMENTS, exactly the same, produced by a POWER SOURCE.

> **MR** (→): Group of possible and successive RESISTANT LEVERAGE MOMENTS, all of them being the same, produced by the SPECIFIC APPLICATION of a POWER SOURCE.

It is understood that the **A E F B** rectangle superimposes the **G C D H** rectangle; that is, superimposed to the **ACD** triangle to see how the respective LEVERAGE MOMENTS are related among them in order to keep constant the equation MOTIVE FORCE = RESISTANT POWER by means of the gearing down of the rotation motor.

**FIG. 1.**

**(1)** Housing having the POWER (II) ADAPTOR, composed by diverse elements, according to every concrete realisation: cones, cylinders, etc.

**(2)** Axle composed by diverse elements, according to every concrete realisation, symbiotic with the transmission shaft.

**(3)** Axle composed by diverse elements, according to every concrete realisation, symbiotic with the driving shaft.

**(4)** Screw-axle, which ruled by the REGULATOR (III), moves the nut-pinion (5) to "connect" (2) and (3) at the adequate spot.

**(5)** Nut-pinion, which moved by (4), "connects" (2) and (3).

**(6)** Empty cylindrical box with a wheel affects its symbiotic with (4) and with blades in its perimeter, which turns either way, depending on the fluid's direction of (34).

**(7)** The same as (6).

**(8)** Empty cylinder with two sectors or piston, according to FIGS. **2**, **2a**, **3** and **4**; one of them symbiotic with the semi-axle of the driving shaft and the other one with (3), which become symbiotic among them due to the fluid that separates them.

**(9)** The same as (8), but the transmission shaft.

**(10)** Orifice (Figs. **2a** and **4**) through which the progressive pressure that the elements of (8) exert on the fluid inserted as a connector, is transmitted.

**(11)** The same as in (10), but on the elements of (9).

**(12)** Orifice (Figs. **2a** and **4**) through which the retrograde pressure is transmitted due to the elements of (8) exert on the fluid inserted as a connector.

**(13)** The same as in (12), but on the elements of (9).

**(14)** Cylindrical box (FIG. **2a**), symbiotic with the motor semi-axle, which due to the centrifugal action of the pistons transmits the pressure through (12), (20) and (21).

**(15)** The same as (14), but symbiotic with the transmission shaft, and it transmits its pressure through (16).

**(16)** Tube that transmits the pressure from (15).

**(17)** Major piston of the valve in immediate position to the engine ticking over in order to get a strong "reprise".

**(18)** Minor piston of the valve.

**(19)** Spring that opposes to the valve's movement.

**(21)** Entrance of progressive and regressive pressures (8) and centrifugal pressure of (14).

**(22)** Valve.

**(23)** Canal giving way to (25).

**(24)** The same as (23).

**(25)** Valve.

**(26)** It connects (34) with (7).

**(27)** Canal allowing the fluid's return.

**(28)** and (29) Spring that opposes to the valve's movement.

**(30)** It connects (34) with (6).

**(31)** Canal allowing the fluid's return.

**(32)** Valve's right piston in centred or balance position.

**(33)** Valve's left piston in centred or balance position.

**(34)** Pressure-fluid tank.

**(35)** Discharged valve that reverts to the tank (38).

**36)** and (37) adjustable valves.

**(38)** Tank getting the fluid coming from the circuits.

**(39)** Pump that injects the fluid at pressure in the tank (34).

**(40)** Accelerator pedal, which, when loose, moves (41) to the left.

**(41)** Multiple sliding valve in the activated accelerator position.

**(42)** Major piston of the valve in the position of the engine ticking over.

**(43)** Minor piston of the valve in the position of the engine ticking over.

**(44)** Piston which, due to the action of (34), releasing the clutch (50) (in the engine ticking over position or realising the clutch).

**(45)** Multiple valve or belt in the engine ticking over position (deactivated accelerator).

**(46)** Centrifugal regulator of parallelogram with counterweight.

**(47)** Spring that opposes to the action of (46).

**(48)** Pinion connected to the driving shaft, which with it turns symbiotically.

**(49)** Pedal or control that moves (45) to the left.

**(50)** To put down the clutch ruled by (44) and (49), in position of released clutch.

**(51)** Springs that put down the clutch (50) and oppose to the action of (44).

**FIG. 2.**

Axial section of (8) and (9) of **FIG. 1**, showing two sectors, symbiotic with their respective semi-axles.
**FIG 2a.** (another concrete realisation of (8) and (9) of FIG. 1).
Section of (8) and (9) of FIG. 1, showing a couple of pistons, symbiotic with their respective semi-axles.
**(10)** and **(11)** correspond with (10), (11), (12) and (13) of FIG. **1**.
The thick arrows represent the progressive pressure that the major pistons have.
The thin arrows represent the retrograde pressure that the minor pistons have.

**FIG. 3.**

Representation in **3D** (dimensions) of (8) and (9) of FIG. **1**.

**FIG. 4.**

Transversal section of (8) and (9) of FIG. **1**.

**FIG. 2b.**

Axial section of (14) and (15) of FIG. **1**.

**(1)** Empty cylindrical box symbiotic with the semi-axle and full of fluid.
**(2)** Free pistons, which due to the centrifugal action, push the fluid to (4) and transmits the pressure through (5).
**(3)** Empty space full of fluid.
**(4)** Empty cylindrical box and attached to (1), which is fixed and does not turn with the semi-axle.
**(5)** Orifice through which the pressure applied (2) by the centrifugal action is transmitted.
**(6)** Bearings.

**FIGS. 5 and 6.**

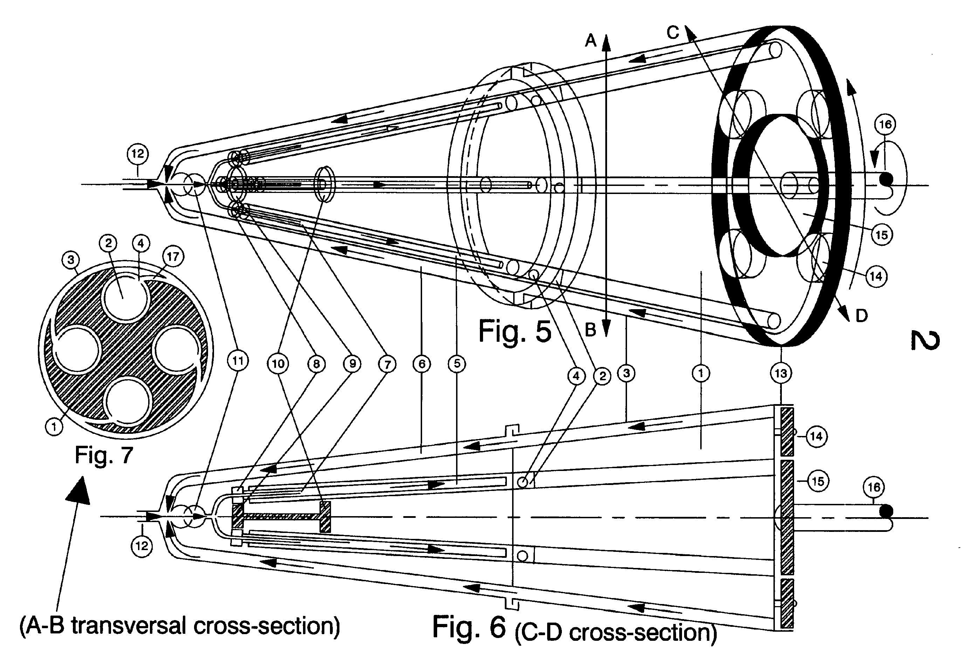

**(1)** Fixed cone with cylindrical canals (2) where both semi-empty cylindrical tubes are arranged (2)
**(2)** Semi-empty cylindrical tube which, ruled by a regulator, moves inside its respective canal (1) and through which some fluid impelled by the pump (11) flows and goes out by the hole (4).
**(3)** Empty cone, with paddles in its internal side, which covers the cone (1), around which it moves impelled by the fluid coming out of (4) through (17) of Fig. 7.
**(4)** Orifice by which the fluid comes out, affecting the paddles of (3).
**(5)** Empty screw, and thread affect the tube (2), which ordered by the regulator through (8), moves (2) in either direction.
**(6)** Limited canal by (1) and (3) and the fixed prolongation of (1) by which the fluid goes back to (11) coming from (4).
**(7)** Cylindrical canal by which (11) injects the fluid inside (2).
**(8)** Symbiotic pinion with the screw (5) and engaged with (9).
**(9)** Pinion, symbiotic with (10), which turns ruled by the regulator.
**(10)** Pinion, symbiotic with (9), with paddles instead of gears, and placed in a cylindrical drum, which turns impelled by the fluid ruled by the regulator.
**(11)** Pump which, impelled by the power source, and by the one this source is transmitted, through canal (7), injecting the fluid in the tubes (2).
**(12)** Fluid entrance coming from a tank.
**(13)** Jagged crown symbiotic with (3) and engaged with the pinions (14).
**(14)** interconnected pinions with (13) and (15), whose axles are fixed in (1).
**(15)** Symbiotic pinion, with axle (16), which transmits the movement and the power to the application point.
**(16)** Symbiotic axle with (15).

**FIG. 7.**

**(1)**, (2), (3) and (4) correspond to the ones in FIGS. **1** and **2**.
**(17)** Canal in the direction of the generator set of cones (1), by which the fluid from tube (2) comes out, expelled by the orifice (4), which affects the paddles of the interior side (3), making it turn.

**FIGS. 8** and **9.**

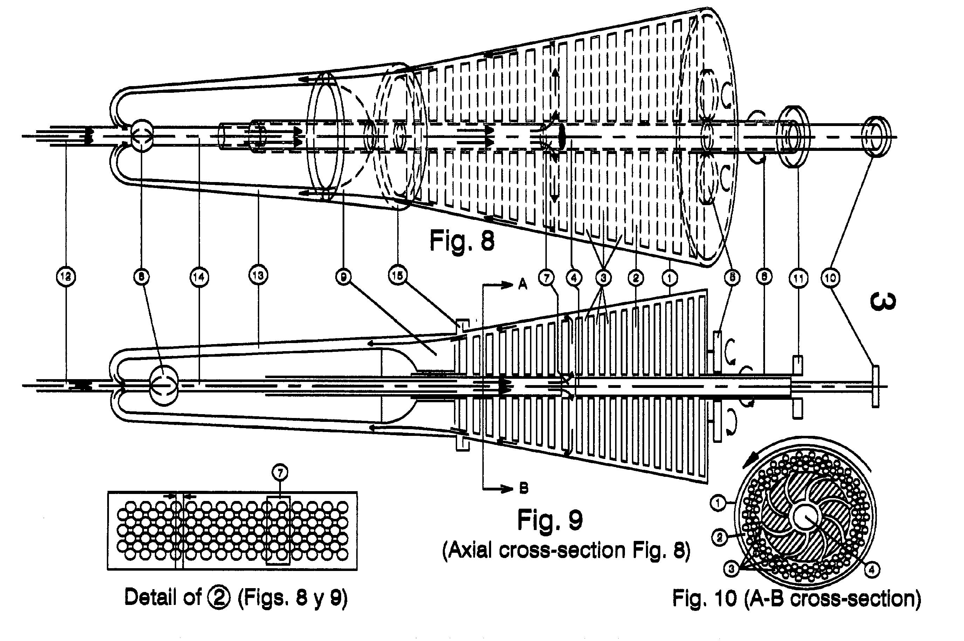

**(1)** Cone body that, symbiotic with (5), contains (2).
**(2)** Cone body that, symbiotic with (6), past through the canals (3).
**(2)** Canals where the fluid flows from the chamber (7).
**(4)** Cylinder, empty to the left of (7), and not empty to the nght.5
**(5)** Pinions, symbiotic with (1), which are engaged with (6).
**(6)** Cylinder, symbiotic with (2), which transmits the power and the rotation of (2).
**(7)** Chamber by which the fluid that (8) injects at pressure comes out in the empty side of (4).
**(8)** Pump which, ruled by a power source, impulses the fluid through the canals (3).
**(9)** Fixed and empty piece that gathers the fluid that comes out through (3) and canalise it to which again injects it.
**(10)** Device which, ruled by a regulator, moves (4) from right to left in order to make the fluid go out through the adequate canals (3).
**(11)** Pinion that transmits the motive force from (1) and (2).
**(12)** Fluid entrance coming from a tank.
**(13)** Cylindrical canals and prolongation of (9), which gather the fluid coming through (3) and canalise it to (8).
**(14)** Fixed tube that injects the fluid in (4).
**(15)** Joints among the mobile cones (1) and (2) with the fixed piece (9).
The (7), of the detail (2) of Figs. **8** and **9,** are orifices of canals (3) of Figs **8, 9** and **10.**

**FIG. 10.**

**(1),** (2), (3) and (4) correspond to the ones of FIGS. **8** and **9**.

**FIG. 11.**

**(1)** Symbiotic cylinder with the axles (2) and placed inside the cylinders (3) and with longitudinal blades.
**(2)** Symbiotic Axles with (1).
**(3)** Cylinders which cover (1) and with blades in their internal surface.
**(4)** Symbiotic axles with (3) which, ruled by a regulator, bringing them closer or further from the ones of (3).
**(5),** (6), (7) and (8) are equivalent to (1), (2), (3) and (4), respectively.
**(9)** Inserted piece between the two tandems of the axles.
**(10)** Fluid's entrance.
**(11)** Pieces that delimitate the area of the fluid's flow.
**(12)** Fluid's exit
**(13)** Piece or housing covering the group of cylinders and the inserted piece (9).

**FIG. 12.**

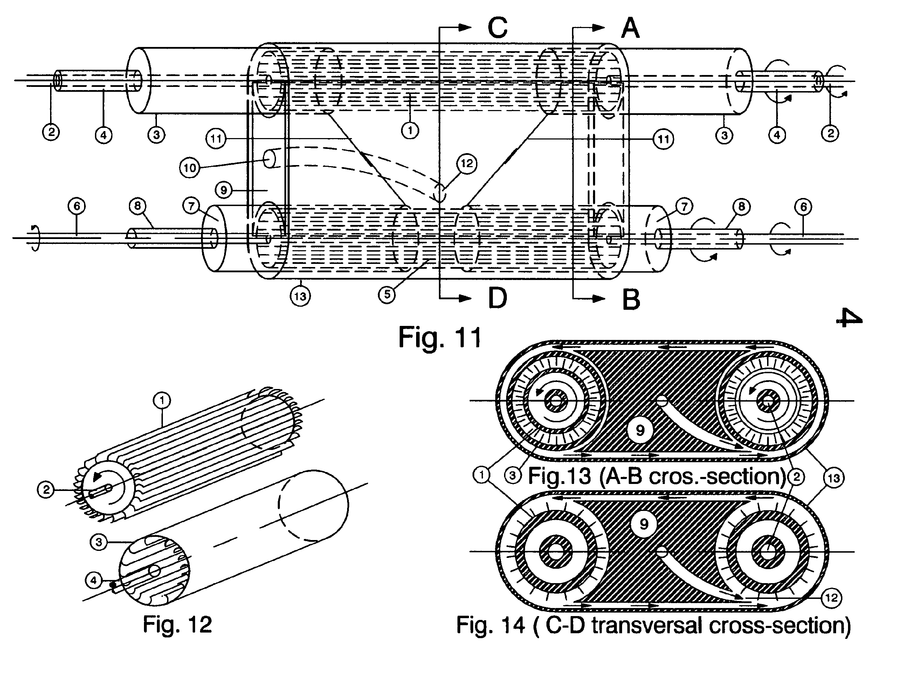

**(1),** (2), (3) and (4) correspond to the ones of Figure **11.**

**FIG. 13.**

**(1),** (3), (9), (10) and (13) correspond to the ones of Figure 11.

**FIG. 14.**

**(1),** (9), (10) and (13) correspond to the ones of Figure 11.

**FIG. 15.**

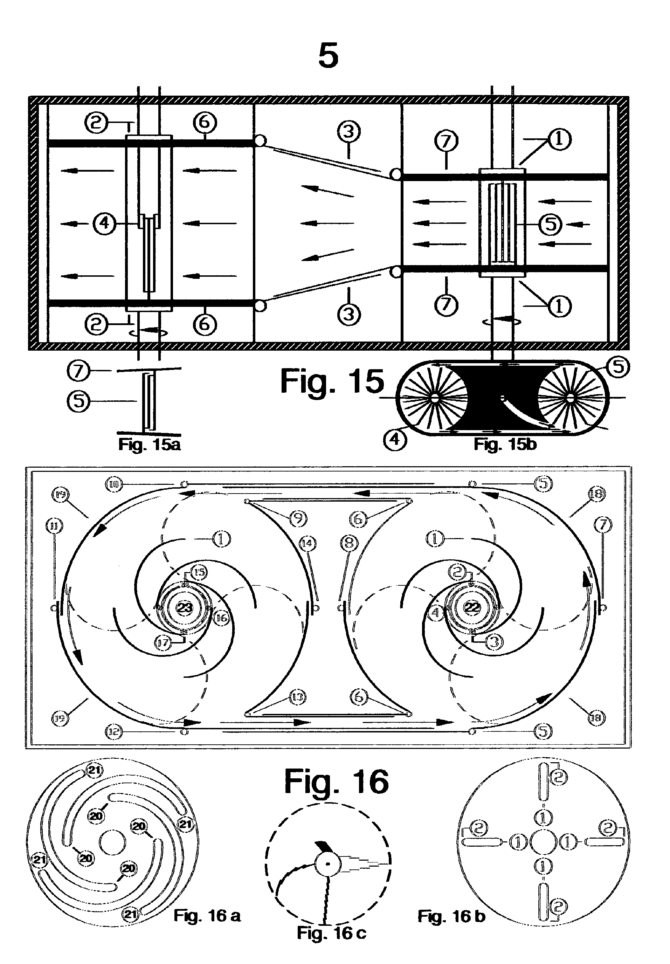

Represents a cut and superior view of Fig. **15b.**

**(1)** Axle that turns symbiotic with the blades (5) inside the cylinder.
**(2)** Axle that turns symbiotic with the blades (5) inside the cylinder.
**(3)** Sliding pieces synchronised with (6) and (7), which delimit the fluid circulation canal between both cylinders.
**(4)** Blades, symbiotic with the bases (6) of the cylinder, which vary their amplitude (not their ratio).
**(5)** Blades, symbiotic with the bases (7) of the cylinder, which vary their amplitude (not their ratio).
**(6)** Cylinder bases, connected among them by means of extensible blades (4), which, controlled by the REGULATOR (III), come closer or go further from each other.
**(7)** Similar to (6).
The cylinder bases, ruled by the REGULATOR, come closer or go further from each other alternatively: when (7) come closer, (6) go further, and viceversa

**Fig. 15a.**

Are the cylinder bases, which are not at parallels (the closest among them are to be found in the upper semicircle more than in the lower semicircle, according to Fig. 15b, and the inverse in the second cylinder) in order to favour the exit to the output of the second one and the entrance to the input of the first one.

**(1)** Three-element extensible blade (paddle), which can be enlarged adding units of the central element.

**Fig. 15b.**

Transversal section, which shows the two cylinders with blades (5) and (4).

**Fig. 16.**

**(1)** Curved and rigid blades, symbiotic with the axis (2), which, ruled by the REGULATOR (III), vary their ratios.
**(2)** Axles that pivot in the annular piece (4), symbiotic with the main axle (22).
**(3)** Annular piece engaged with the axis (2) and being ruled by the REGULATOR (III).
**(4)** Annular piece where the axis pivot (2).
**(5),** (6), (7), (8), (9), (10), (11), (12), (13) and (14) are joints which, ruled by the REGULATOR (III), and synchrony with the variation of the blades ratio (1), enlarge or reduce proportionally the cylinders' ratio. All these joints vary in the spot between (1) and (2) of **Fig. 16b**, that is, depending on the cylinder's ratio.
**(15)**-(16)-(17) correspond with (2)-(4)-(3), but in the left cylinder. **(18)**-(19), as well as the stretches (6)-(8)-(6) and (3)-(14)-(9), are flexible and form the cylinders' walls.
**(22)** Main axle symbiotic with the annular piece (4).
**(23)** Main axle symbiotic with the annular piece (15).

The stretches between the joints (5)-(10) and (5)-(12) are rigid and straight
The dimension of both cylinders vary alternative and proportionally: while one of the increases, the other one decreases.

**Fig. 16a.**

Fluctuating discs which, attached in the exterior to the ones of Fig. **16b,** forming pairs of the maximum size possible that can reach the variable cylinders, and which constitute the bases of a reel per cylinder. In these bases (discs) the mobile elements evolve(the blades, the joints and the stretches limited by these) as to produce the adequate sizes.
**(20)**-(21) are curved spots, one per joint (5), (6), (7), (8), (9), (10), (11), (12), (13) and (14),
which guide these one when the disc varies the angle existing between (20) and (21). The axle (22)/(23), symbiotic with the blades, passes in the interior of the cylinder of each reeL

**Fig. 16b.**

**Fixed** discs which, attached internally to the ones of Fig. **16a**, form pairs of the maximum size possible that can reach the variable cylinders, and which constitute the bases of a reel per cylinder. In these bases (discs) evolve the variable elements (the blades, the joint and the stretches limited by these) in order to produce the adequate dimensions.
**(1)**-(2) are straight and radial spots, one per joint, guided radially by the disc of Fig. 16 when varying the angle (20)-(21).

**Fig. 16c.**

Different types of articulated blades which, guided by both pairs of discs (fixed and with radial spots in one of them, and varying and with curved spots in the other one) vary conveniently the dimension of the radium.

**FIG. 18.**

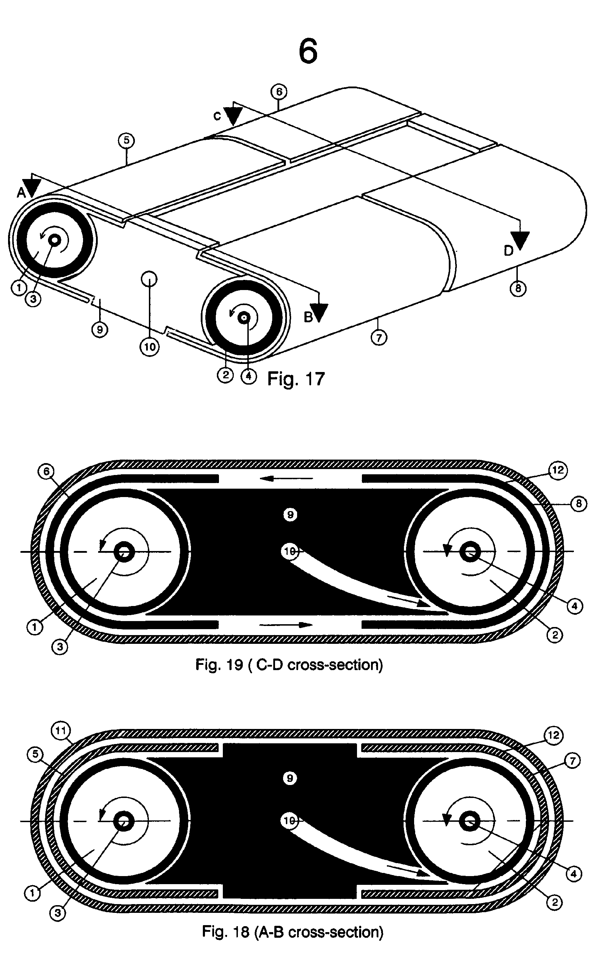

All its numbers correspond to the ones in Figure **17**, except for (11), which is omitted for more clarity.
**(11)** Housing which keeps the components of Fig. **17**
**(12)** Direction of the fluid's circulation.

**FIG. 19.**

All its numbers correspond to the ones of Figure **17**, except for (11), which is omitted for reasons of clarity.
**(11)** Housing keeping the components of Fig. **17.**
**(12)** Direction of the fluid's circulation.

**FIG. 20.**

**(1)** Cone with blades.
**(2)** Blades.
**(3)** Device that injects the fluid by pressure in the blades.
**(4)** Axle ruled by a regulator that moves (3) parallel with the generator set of the cone.
**(5)** Rail bar on which it belts (3).
**(6)** and **(7)** Fluid's entrance and exit, respectively, which transmits the motive force by means of a pump.

**FIG 21.**

**(1)** Disc with blades, which turns on the central axle, pushed by the fluid at pressure.
**(2)** Blades on the disc's base.
**(3)** Screw, ruled by the regulator, with half the threads in a direction and the other one in the opposite direction, which when turning it gets closer or further from (4).
**(4)** Devices that inject the fluid at pressure and they get closer or further depending on the rotation of (3).
**(5)** Exit of fluid transmitted by the motive force.
**(6)** Riel bars where they belt (4).
**(7)** Fluid's entrance which transmits the motive force by means of a pump.

**FIG. 22.**

**(1)** Cone, symbiotic with the axles (3), with rotates within a tubular canal covering (5) and impulses the fluid.
**(2)** Cone symbiotic with the axis (4) which turns affecting a tubular canal wrapping (5).
**(3)** and **(4)** Axis that are symbiotic with (1) and (2), respectively.
**(5)** Casing which goes round (1) and (5) of canals, which compose the wrapping of (1) and (2), canalise the fluid and connect (1) and (2).
**(6)** Distributor that injects the fluid in the adequate canal closing the circuit around cones (1) and (2) and connecting them.
**(7)** It determines the open part of the circuit of each canal.
**(8)** It guides where it moves (6) from end to end
**(9)** Thread orifice for the screw, ruled by the regulator, which, when turning in one or other direction moves (6) along (8).
**(10)** Fluid's entrance taken from the canals that uncovers (6) in its movement

**FIG. 23.**

All the numbers correspond to the ones of Figure 22.

**FIG. 24.**

**(1)** Cone, symbiotic with its axle, which gathers and transmits the motive force.
**(2)** Cone, symbiotic with its axle, which gathers the motive force and transmits it to the application.
**(3)** Cylindrical belt that connects (1) and (2).
**(4)** Device which, ruled by the regulator, moves (3) to connect it to (1) and (2) at the adequate spot.

**FIG. 25.**

Detail of FIG. **25**.

**(5).** Orifice through which it belts (3).
**(6)** Pulleys that turn freely on the axis (7) to facilitate the movement of (3).
**(7)** Axis on which the pulleys freely turn (6).

**FIG. 26.**

**(1)** Fixed cylinders which are the support of cylinders (9), (23) and (24).
**(2)** Cylinder that is engaged internally with (4) and makes it turn through (8).
**(3)** Cylinder that is engaged internally with (5) and makes it turn through (10).
**(4),** (5), (6) and (7) Cones formed by small wheels [pieces like a disk] (8) and engaged with (2) and (6), (3) and (7), (2) and (4), (3) y (5), respectively.
**(8)** Small wheels [pieces like a disk] forming cones (4), (5), (6) and (7).
**(9)** Empty cylinder with orifices and with spheres that connect it to (4), according what is detailed in

**FIGS. 29 and 32.**

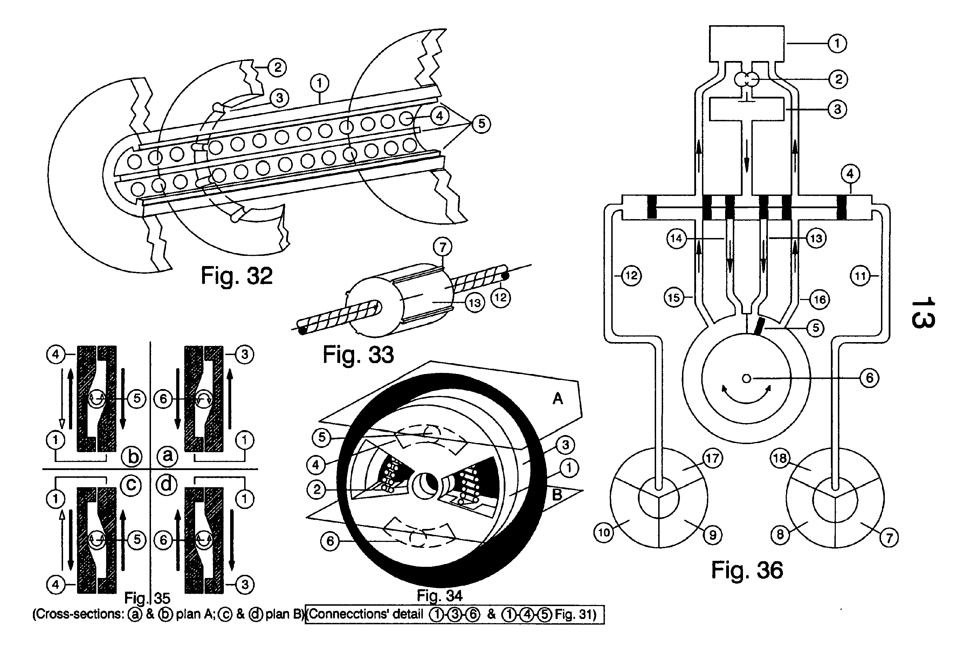

**(10)** Screw which, ruled by the regulator, moves (11) inside (9), according to what is detailed in FIG. **33**.
**(11)** Nut-cylinder connecting (9) with (4) through the adequate small wheel (like a disk).
**(12)** Nut-cylinder connecting (9) with (5) through the adequate small wheel (like a disk).
**(13)** Nut-cylinder connecting (23) with (6) through the adequate small wheel (like a disk).
**(14)** Nut-cylinder connecting (24) with (7) through the adequate small wheel (like a disk).
**(15)** Pinion connecting both cylinders with orifices and spheres (9).
**(16)** Connection between both pinions.
**(17)** Pinion which, ruled by the regulator, makes the screw turn (10).
**(18)** Pinion symbiotic with (24).
**(19)** Pinion which, ruled by the regulator, makes the screw turn (26).
**(20)** Pinion which, ruled by the regulator, makes the screw turn (25).
**(21)** Pinion symbiotic with (23)
**(22)** Pinion which, ruled by the regulator, makes the screw turn (10).
**(23)** Empty cylinder with orifices and spheres that connect it with (6).
**(24)** Empty cylinder with orifices and spheres that connect it to (7).
**(25)** Screw which, ruled by the regulator, moves (13).
**(26)** Screw which, ruled by the regulator, moves (14).

**FIG. 28.**

**(1)** One-piece cone, symbiotic with the axle, which gathers the motive force.
**(2)** Cylinder with multiple small wheels (disks)which get engaged with cones (1) and (5).
**(3)** Cylinder inside (2) with multiple orifices which contain spheres that due to the action of (6) are connected to (2), according to what is detailed in Figure 32.
**(4)** Screw inside (3) which, when turning ruled by the regulator, moves (6) to connect (3) with the adequate small wheel (like a disk).
**(5)** Cone, symbiotic with the axle, which transmits the motive force to the application. **(1),** (2), (3) and (5) turn symbiotically: (1), (2) and (5) due to the fact of being directly engaged, and (2) and (3) due to the fact of being engaged by means of the spheres.

**FIG. 29.**

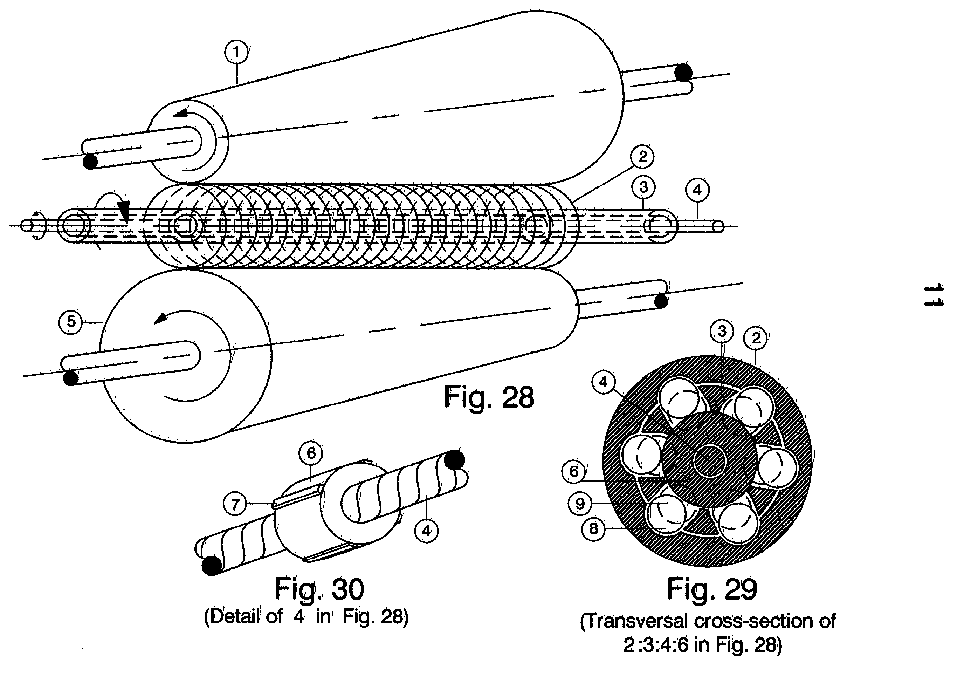

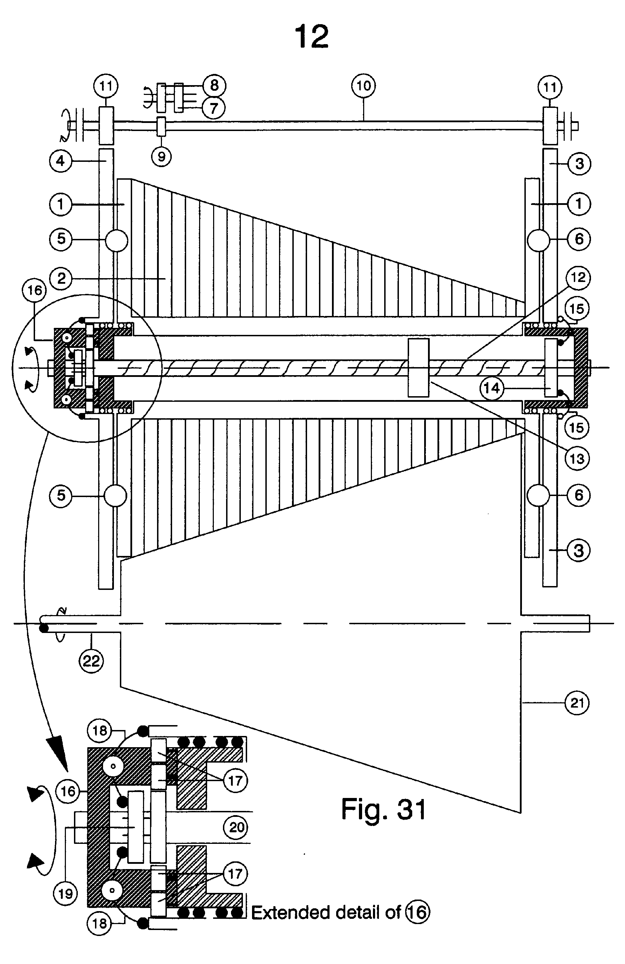

**(2),** (3) and (4) correspond to the ones of FIG. 28.
**(2)** Spheres placed in the cylinder's orifices (3) which, once moved by the nut-cylinder (6) from position (9) to (8), connect (3) with the adequate (2) small wheel (like a disk).
**(3)** Cylinders with orifices, which correspond to (9), (23) and (24) of FIG. **26** and (1) of FIG. **31,** and whose detail is shown in (4) and (5) of FIG. **32.**
**(6)** It corresponds with (6) of FIG. **30,** which is also inside (3) of FIG. **28,** although it might not be noticed.

**FIG. 30.**

**(5)** and (6) correspond with the ones from FIG. **29.**

**FIG. 31.**

[(1)-(2)], [(12)-(13)], [connections (1)-(3)-(6) and (1)-(4)-(5)] and [(1)-(3)-(6) and (1)-(4)-(5)] are detailed in FIGS. **32, 33, 34** and **35**, respectively.

**(1)** Reel whose cylinder with orifices where the spheres that connect it with the cone's(2) adequate small wheel is placed and they are detailed in FIG. **32.**
**(2)** Cone, formed by multiple small wheels (disks), competed in the reel (1).
**(3)** Crown wheel connected with reel (1) through (6), according to what is detailed in the cuts of quadrants **1°** and **4°** of FIG. 35 and in FIG. 34.
**(4)** Crown wheel connected to reel (1) through (5), according to what is detailed in the cuts of quadrants **2°** and **3°** of FIG. 35 and in FIG. 34; also connected to pinions (17) and (20).
**(5)** Spheres (cylinders or rollers) which separate (1) and (5) when moving (1) onto (5), according to what is detailed in quadrants 1° and 4° of FIG. 35. and in FIG. 34.
**(6)** Spheres (cylinders or rollers) which separate (1) and (3) when moving (1) onto (3), according to what is detailed in quadrants 2° and 3° of FIG. 35. and in FIG. 34.
**(7)** Pinion receiving and transmitting the motive force.
**(8)** Pinion receiving and transmitting the motive force to (9).
**(9)** Pinion receiving and transmitting the motive force to the axle, symbiotic with the extreme pinions
**(10)** Pinion receiving and transmitting the motive force through (11) to (1) through (3) by means of the spring.
**(11)** Pinion symbiotic with (10) which synchronises the turn of crowns (3) and (4).
**(12)** Screw-axle, which moves the nut-cylinder (13), due to the action of (3), through (15).
**(13)** Nut-cylinder, which connects the reel's cylinder (1) with the adequate small wheel of (2).
**(14)** Crown wheel symbiotic with (12).
**(15)** Rocker arm shafts, which by the action of (3), stop the rotation of the screw axle (12).
**(16)** Fixed support-piece which contains the axis of the pinions (17) engaged among them.
**(17)** Four pinions, engaged among them in twos; the ones in the centre with **(19),** and the ones in the extremes with (4).
**(18)** Rocker arm shaft which, by the action of (4), moves (19) and joins it with (20).
**(19)** Pinion symbiotic with (12) which, moved by (18) due to some spots in (12), is put together with (20).
**(20)** Pinion geared with the ones of (17), but it turns freely on the axle (12).
**(21)** Conical pinion that gathers the motive force by means of the adequate small wheel of cone (2).
**(22)** Axle symbiotic with (21) which transmits the motive force to the specific application.

**FIG. 32.** (Its elements correspond with the ones of FIG. **31**).
**FIGS. 32, 33, 34** and 35 are details of [(1)-(2)], [(12)-(13)], [connections (1)-(3)-(6) and (1)-(4)-(5)]**and** [(1)-(3)-(6) and (1)-(4)-(5)] of FIG. 31, respectively.

**(1)** Reel's cylinder (1).
**(2)** Cone formed by small wheels.
**(3)** Reduced surfaces with spheres connecting (1) with the adequate small wheel (2).
**(4)** Orifices where the spheres are.
**(5)** Guiding rail which makes (1) symbiotic with (13) from FIG. **33**

**FIG. 33.**

**(7)** Guiding rail; it corresponds with (7) of FIG. **30.**
**(12)** and (13) correspond to (12) and (13) of FIG. **31.**

**FIG. 34.**

**(1)** Corresponds with reel (1) of FIG. **31.**
**(2)** Springs which make crowns (1) and (3) symbiotic and avoid them from sliding.
**(3)** Crown wheel that receives and transmits the motive force to (1) through (2).
**(4)** Empty box between (1) and (3) containing the sphere or roller (5).
**(5)** Sphere, roller or roller **separating** or **bringing closer** crowns (1) and (3) in the axial direction when both of them slide due to the difference in their rotation angles when there is inequality between the motive force and the resistant power.
**(6) It is equivalent to (4) and (5), but opposed in diameter.**

**FIG. 35.**

The relative positions among (1)-(3)-(6) of quadrants (a) and (d), and among (1)-(4)-(5) of quadrants (b) and (c), represented in Fig. 35, correspond to the state of balance in which the MOTIVE FORCE = RESISTANT POWER.

**(a)** Cross-section according to plan A of FIG. **34.**
(1), (3) and (6) correspond to the same ones of FIG. **31** and FIG. **34.**
**(b)** Cross-section according to plan B of FIG. **34.**
(1), (4) and (5) correspond to the same ones of FIG. **31** and FIG. **34.**
**(c)** Cross-section according to plan B of FIG. **34.**
(1), (4) and (5) correspond to the same ones of FIG. **31** and la FIG. **34.**
**(d)** Cross-section according to plan A of FIG. **34.**
(1), (3) and (6) correspond to the same ones of FIG. **31** and FIG. **34.**

The thickness of the arrows indicates the intensity of the forces actuating on (4), and the relative moment between (1) and (3) or (1) and (4).

**FIG. 36.**

Hydraulic regulator ruling the nut-cylinder (13), of FIGS. **31** and **33**, through the screw-axle (12), of Fig. **31**, substituting (3)-(6)-(15) and (4)-(5)-(16) of Fig. **31**.

**(1)** Oil tank to supply the circuit.
**(2)** Pump which, activated by the power source, injects at pressure the oil in (3).
**(3)** Tank with oil at pressure.
**(4)** Multiple sliding valve.
**(5)** Piston symbiotic with (6), which turns in either direction depending on the fluid going through (13) or (14).
**(6)** Disc, symbiotic with (12) of FIG. **31,** which moves (13) to any direction, according to the rotation direction (6).
**(7)** Sector, inside the cylinder, symbiotic with the driving shaft.
**(8)** Sector, inside the cylinder, symbiotic with the motive semi-axle, which receives the motive force of
**(7)** through the oil inserted between both sectors making them symbiotic.
**(9)** Sector, inside the cylinder, symbiotic with the transmission semi-axle, which the motive force takes from the adaptor, which at the same time receives it from (8).

**(10)** Sector, inside the cylinder, symbiotic with the transmission semi-axle, which transmits the motive force to the application, received from (9) due to the oil inserted between (9) and (10).

**(11)** Tube which transmits (4) the pressure that the oil inserted between (7) and (8) receives; (7) as motive force and (8) as resistant.

**(12)** Tube which transmits (4) the pressure that the oil inserted between (9) and (10) receives; (9) as motive force and (10) as resistant.

**(13)** Tube where the oil goes through from (3) when (4) moves to the right when the pressure of (14) is higher than (11).

**(14)** Tube where the oil goes through from (3) when (4) moves to the right when the pressure of (11) is higher than (12).

**(15)** Tube where the oil comes back to (1) when (5) moves in the clockwise direction.

**(16)** Tube where the oil comes back to (1) when (5) moves in the opposite direction.

**(17)** Fluid connecting (9) with (10) and whose pressure is transmitted through (12).

**(18)** Fluid connecting (7) with (8) and whose pressure is transmitted through **(11).**

**FIG. 37.**

**(1)** Axle or motive shaft.

**(2)** Disc in the form of an inverted dish turning freely on axle (5), engaged with (6) by its concave side.

**(3)** Disc in the form of an inverted dish turning freely on axle (5), engaged with (6) by its concave side.

**(4)** Cone formed by small wheels (disks) and engaged with (2) and (3), transmitting them the rotations it receives from (1).

**(5)** Cylinder on which (2) and (3) turn freely.

**(6)** Cone formed by small wheels (disks) and engaged with (2) and (3), transmitting them the rotation it receives from (1).

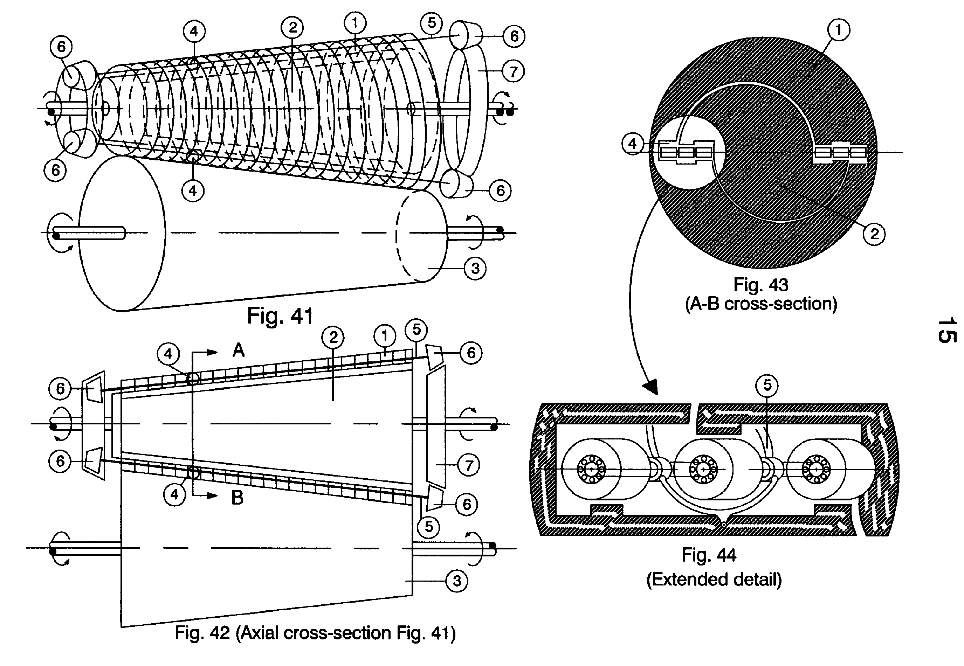

**(7)** Device symbiotic with (1) connecting (1) with (2) and (3) through the adequate small wheel; detailed in FIGS. **38** and **40**.

**(8)** Device symbiotic with axle (9) connecting with the adequate small wheel (disks); detailed in FIGS. **38** and **40**.

**(9)** Axle symbiotic with (10), and not symbiotic with (1).

**(10)** Pinion, symbiotic with (9), which engages with (12).

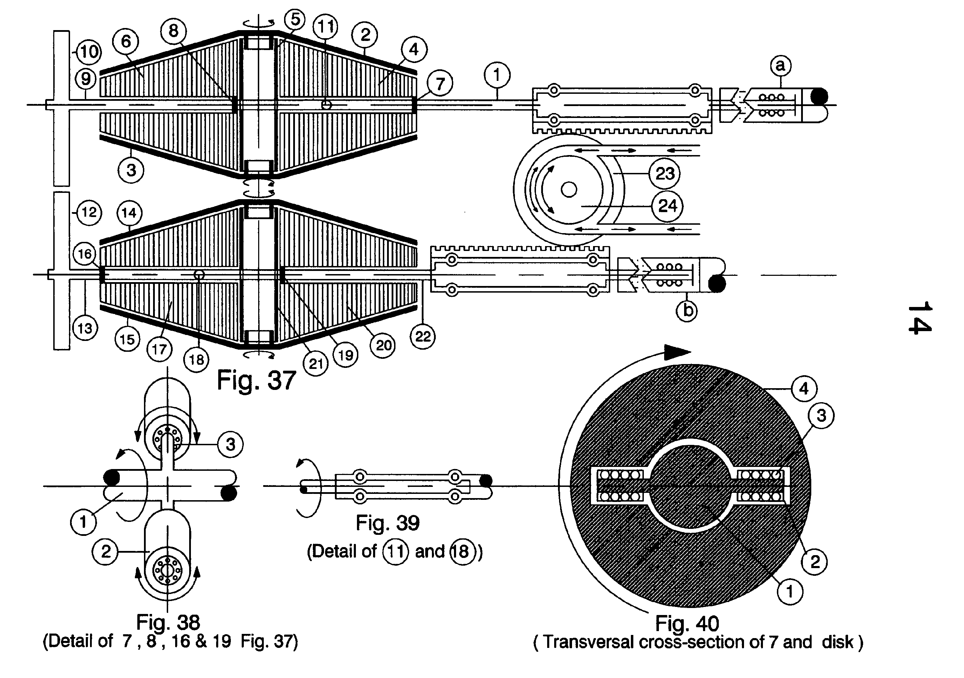

**(11)** Union of both semi-axles, (1) and (9), which makes it symbiotic in the movement, but not in the rotation, as detailed in FIG. **39**.

**(12)** Pinion getting the rotation of (10) and transmitting it to (17) through (16).

**(13)** Axle symbiotic with (12) and (16).

**(14)** Disc in the form of an inverted dish turning freely on axle (21) and engaging with (17) by its concave side.

**(15)** Disc in the form of an inverted dish turning freely on axle (21) and getting engaged with (17) by its concave side.

**(16)** Device symbiotic with (13) connecting it to the adequate small wheel, according to what is detailed in FIGS. **38** and **40.**

**(17)** Cone, formed by small wheels (disks), engaged to (14) and (15), transmitting them the rotation it receives from (16).

**(18)** Union between the semi-axles (13) and (22), making them symbiotic in the movement, but not in the rotations, as detailed in FIG. **39**.

**(19)** Device symbiotic with (22), connecting it to (14) and (15) through the adequate wheel of (20), as detailed in FIGS. **38** and **40.**

**(20)** Cone formed by small wheels and engaged with (14) and (15), from which it received the rotation.

**(21)** Cylinder on which (14) and (15) turn freely.

**(22)** Axle transmitting the force to the specific application.

**(23)** Pinion symbiotic with (24) and engaged with the racks/fasteners.

**(24)** Pinion with blades in its perimeter, which ruled by the regulator, moves (1) and (22) in opposite directions.

**FIG. 38.**

Detail of (7), (8), (16) and (19) of **FIG. 37.**

**FIG. 39.**

Detailed of (11) and (18) of FIG. **37,** which are the unions between the semi-axles (1)-(9) and (13)-(22).

**FIG. 40.**

Cross-section view of (7), (8), (10) and (19) of FIG. **37.**
**(1),** (2) and (3) corresponding with the same ones from FIG. **38.**

**(1)** Semi-axle, corresponding to (1), (9), (16) and (22) of FIG. **37.**
**(2)** Rollers connecting (1), (9), (16) and (22) with the adequate small wheel of (4), (6), (17) and (20), respectively, in FIG. **37**.
**(3)** Bearings.
**(4)** Transversal section of a small wheel (a piece like a disk).

**FIG. 41.**

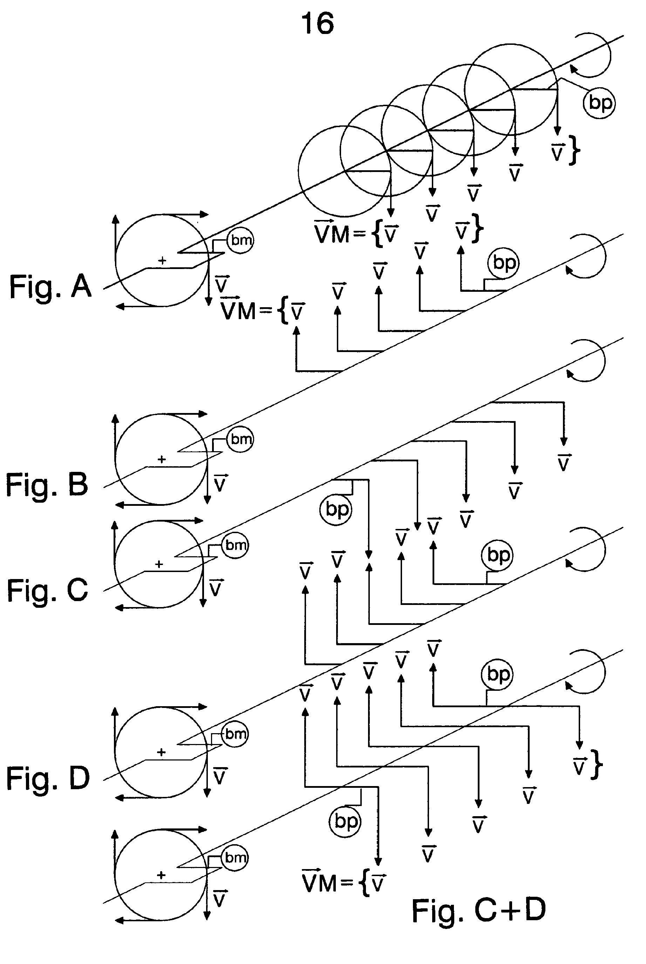

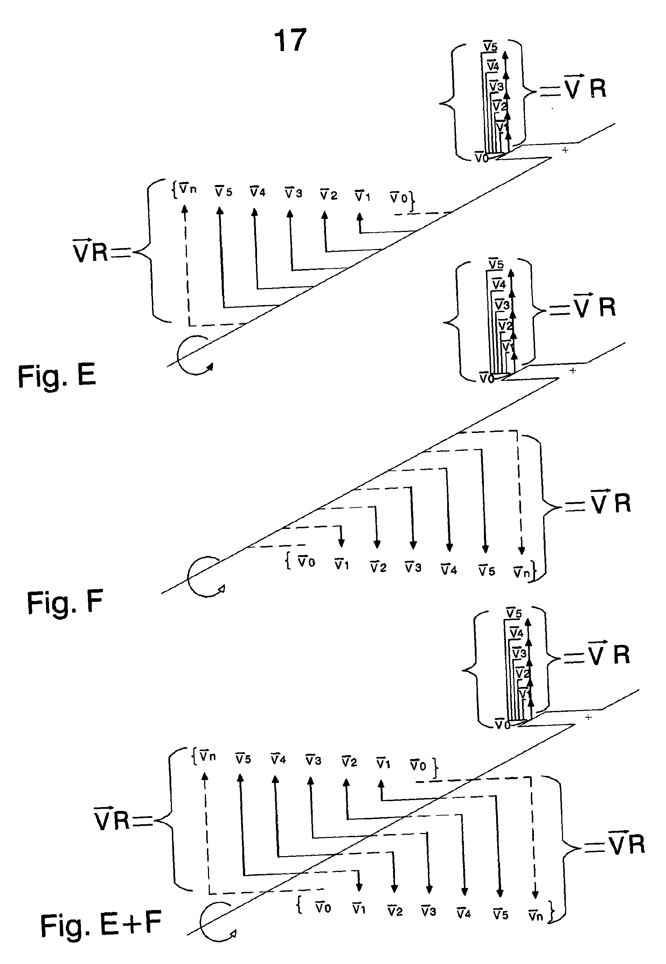

**(1)** Empty cone, formed by small wheels, inside which there is another piece, with which it connects by means of some rollers, according to la FIG. **43.**
**(2)** Interior piece of (1), with which it connects in the way detailed in FIG. **43.**
**(3)** One-piece cone connected to (1).
**(4)** Set of rollers connecting (1) with (2), according to FIG. **43.**
**(5)** Screw-axle which, ruled by the regulator through (7) and (6), moves (4) to connect (2) with (3) by means of the adequate small wheel.
**(6)** Nut-pinion connected to pinion (7) which, when turning, moves the set (4).
**(7)** Pinion which, ruled by the regulator, connects with pinions (6).

**FIG. 42** (Axial cross-section of FIG. 41 with which it corresponds).
**FIG. 43** (A-B cross-section of (1) and (2) of FIG. **42**).

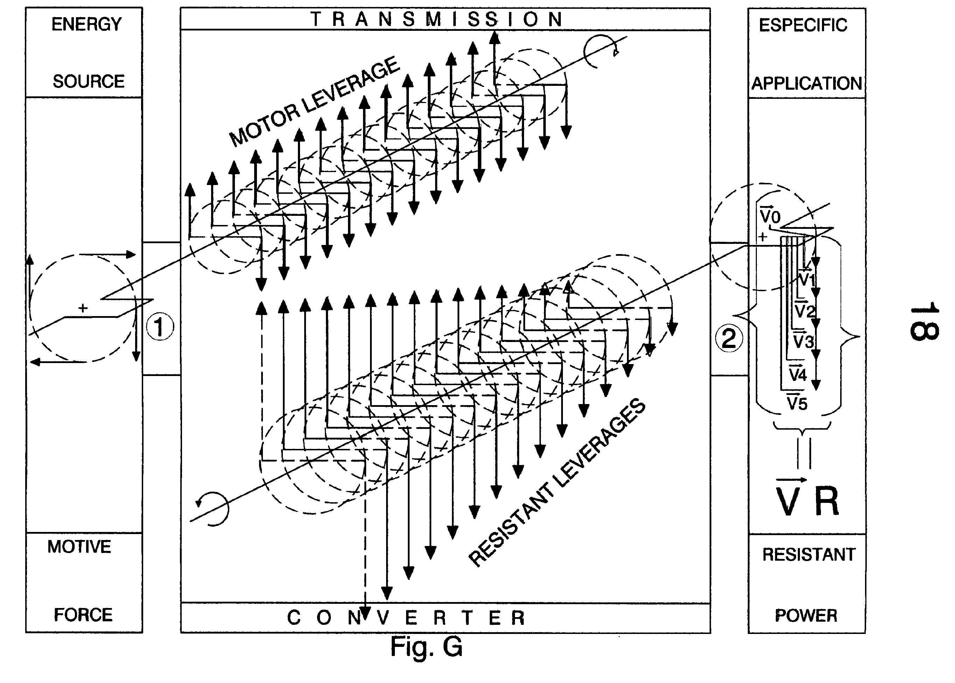

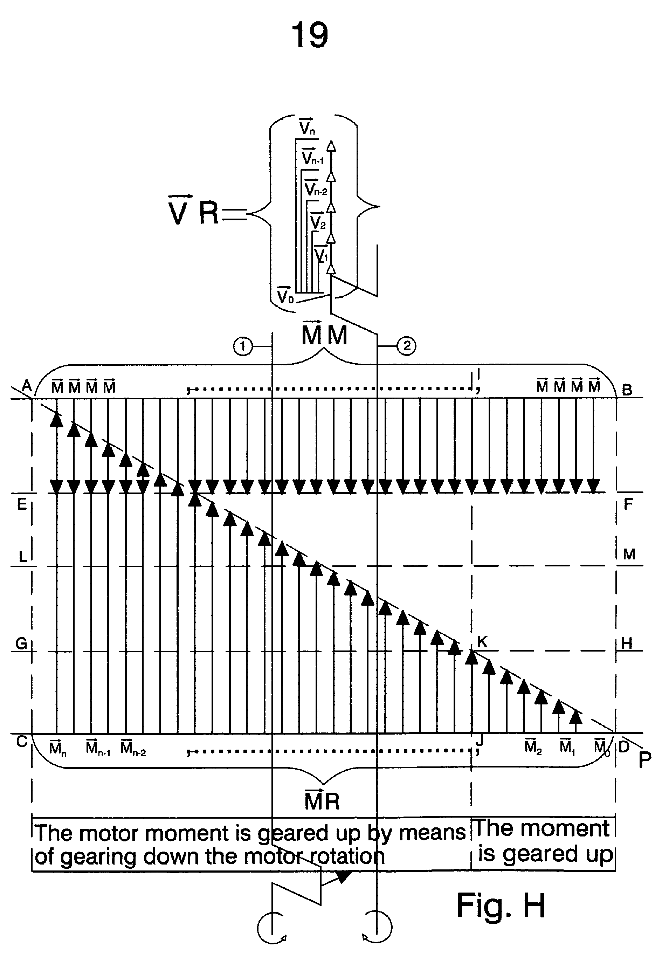

**FIG. 44** (Extended detail of the set (4) of FIG. **43**).

**INVENTION'S WAYS OF REALISATION**

The different ways of realisation described now are circumscribed to the ADAPTOR (II) of FIG. 1, which comprehends different devices, according to every concrete realisation.
**Realisation on Figs. 5, 6 and 7, where the "connection" (5) is hydraulic.**
Correspondences with Fig. **1**:
(3) with (2), (2) with (3), (4) with (5) and (10) with (6)-(7).
The MOTIVE FORCE is transmitted through (11)-(7)-(5), going out through (4) and it affects the interior bladed surface of (3), making it turn in the clockwise direction according to (17) in Fig. 7) and it continues through (13), (14), (15) and (16) towards the SPECIFIC APPLICATION.
If the equation is broken (I) MOTIVE FORCE = RESISTANT POWER due to an increase (or decrease) of this, the pressure on (32) (or,33), of Fig. **1**, increases (or decreases) and it moves to the left (or to the right), operating (34), of Fig. **1**, in (10), which moves (4) to the right (or to the left) to the point where the equation is re-established (I) due to the gearing
The fundament is based on the presumption that (11) injects the same constant volume of fluid per time unit, when moving (4) to the right (or left), such volume makes (3) turn slower (or quicker), since it has to affect a bigger (or smaller) surface (circumference) per time unit [more (or less) the bigger (or smaller) the radium of the cone is], but, at the same time, it increases (or decreases) the leverage since the leverage lever (the cone's radium) increases (or decreases). Therefore, another moment equivalent to the one there was before the equation (I) was broken is obtained; which increases (or decreases) in the rotation, increasing lit (or decreasing it) in leverage, as it can be seen in Figs. from **A** to **H.**
**Realisation on Figs. 8, 9 and 10, where the connection (5) is hydraulic**
Correspondences with Fig. **1**:

(1) With (3), (2) with (2), (7) with (5) and (10) with (6)-(7).

The MOTIVE FORCE is transmitted through (14), going out through (7) and it continues through canals (3) out of (2) and affects the interior bladed surface of (1), making it turn in the clockwise direction and making (2), if this is not fixed, moved in the opposite direction, continuing through (5)-(6)-(11) towards the SPECIFIC APPLICATION.

If the equation is broken (I) MOTIVE FORCE = RESISTANT POWER due to an increase (or decrease) in the equation, the pressure on (32) (or,33), of Fig. 1, increases (or decreases) and it moves to the left (or right), operating (34), of Fig. 1, in (10), which moves (4) to the right (or left) to the point where the equation (I) is restored by the gearing down (or gearing up) of the rotation of (1) and (2).

The fundament is based on the supposition that (8) injects the same constant fluid volume per time unit, when moving (7)-(4) to the right (or left), such volume makes (1) turn slower or (faster), since it has to affect a surface (circumference) which is bigger (or smaller) per time unit [more (or less) the bigger (or smaller) the radium of the cone is], but, at the same time, the leverage increases (or decreases) since the leverage lever increases (or decreases) (the cone's radium). Therefore, another moment equivalent to the one there was before the equation (I) was broken is obtained; which increases (or decrease) in rotation, increasing (or decreasing) in leverage, as can be seen in Figs. from **A** to **H.**

**Realisation on Figs. 11, 12, 13 and 14, where the "connection" (5) is hydraulic.**
Correspondences with Fig. **1**:

(5)-(6) with (3), (1)-(2) with (2), (3)-(4) and (7)-(8) with (4).

The MOTIVE FORCE is transmitted through (5)-(6), which, when turning, injects the motive fluid in the blades of (1), making it turn, and going out through (2) towards the APPLICATION.

If the equation (1) MOTIVE FORCE = RESISTANT POWER is broken due to an increase (or decrease) of this, the pressure on (32) (or, 33), of Fig. **1**, increases (or decreases) and it moves to the left (or right), operating (34), of Fig. **1**, in (4) and (8), separating the (3) and making closer the (7s) simultaneously [(or making closer the (3s) and separating the (7s)], in the adequate proportion in which the equation (I) is re-established.

The fundament is that when varying the separation between the (7s) in relation with the separation between the (3s), the rotation relationship varies between (1) and (5). A separation of the (5s) being smaller (or bigger) which the separation of the (3s) means that the flow that makes (5) circulate affects in a bigger section (or smaller) from the one left in the separation of the (3s), therefore (1) turns quicker or (slower) than (5).

**Realisation on Figs. 17, 18 and 19, where the "connection" (5) is hydraulic.**
This relationship is similar to Figs. **11, 12, 13,** and **14;** differs in that the (3s) and (7s), of Fig. 11, is substituted by (5)-(6) and (7)-(8), of Fig. **17**, respectively.

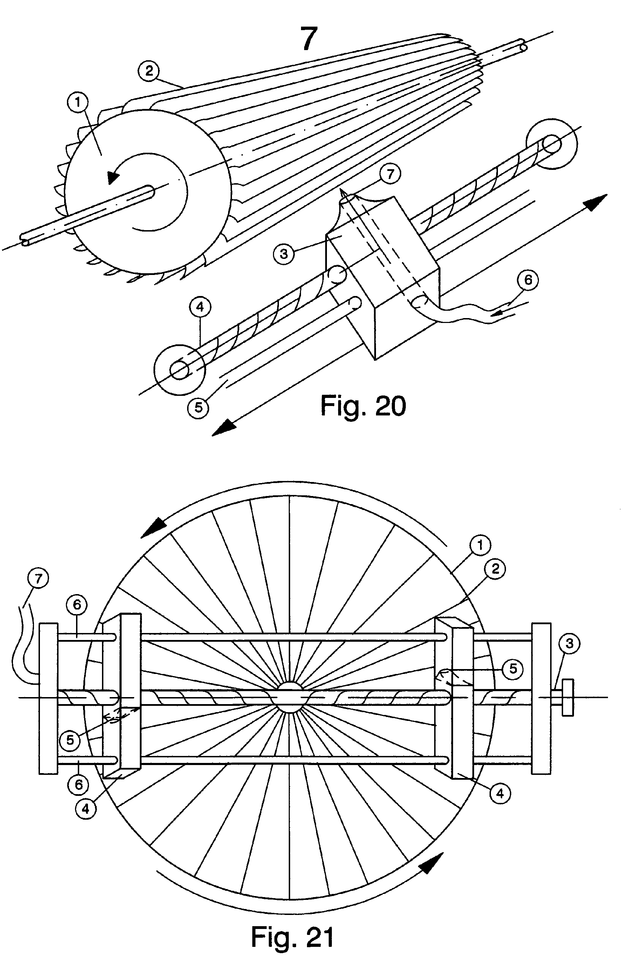

**Realisation on Fig. 20, where the connection (5) is hydraulic.**
Correspondences with Fig. **1**:

(6)-(7) with (3), (1) with (2), (3) with (5) and (4) with (6)-(7).
The MOTIVE FORCE transmits through the fluid (6), coming from the pump which transmits all the MOTIVE FORCE, sending through (7) and affecting (2) of (1), making it turn, and it continues through the axle of APPLICATION.

If the equation (I) is broken MOTIVE FORCE = RESISTANT POWER due to an increase (or decrease) of this, the pressure on (32) (or 33), of Fig. **1**, increases (or decreases) and it moves to the left (or right), operating (34), of Fig. **1**, on (4), which moves (3) to the left (or right) to the point where the equation (1) is re-established due to the gearing down (or gearing up) of the rotation of (1).

The fundament is supposing that (6) injects the same constant fluid volume per time unit, when moving (3) to the left (or right), such volume makes (1) turn slower (or faster), since it has to affect a bigger circumference (or smaller) per time unit [more (or less) the bigger (or smaller) the cone's radium is]; but, at the same time, the leverage increases (or decreases) since the leverage lever (the cone's radium) increases (or decreases). Therefore, another moment equivalent to the one there was before the equation (I) was broken is obtained; which decreases (or increases) the rotation, which increases (or decreases) in leverage, as shown in Figs. from **A** to **H.**

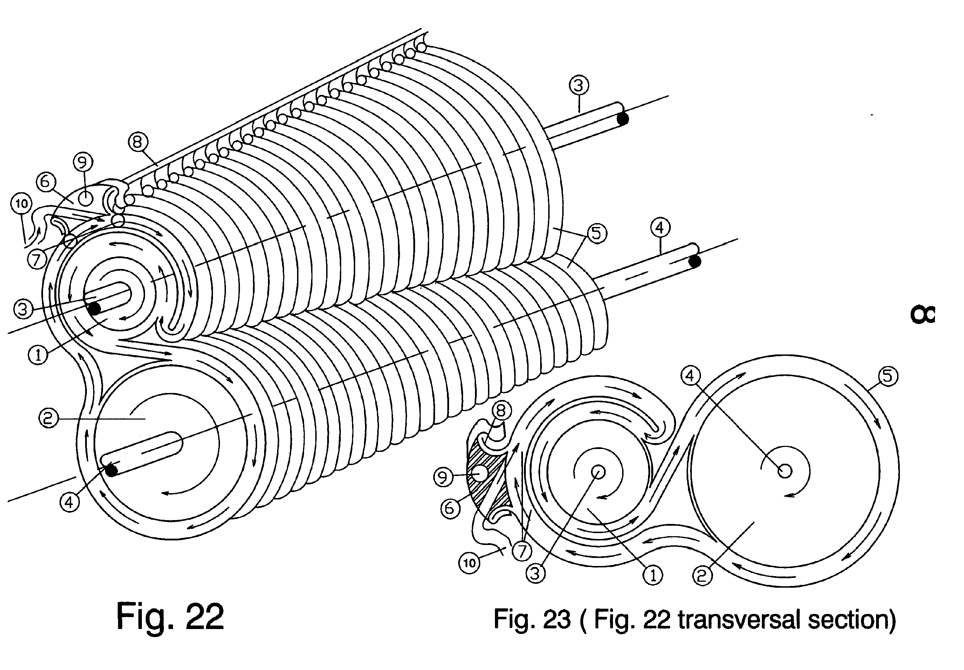

**Realisation on Fig. 21, where the connection (5) is hydraulic.**
Correspondences with Fig. **1**:

(7) with (3), (1) with (2), (4) with (5) and (4) with (6)-(7).
The MOTIVE FORCE is transmitted through the fluid (7), coming from the pump which transmits the MOTIVE FORCE, sending it through (5) and affecting (1), making it turn, and it continues through the axle of APPLICATION.

If the equation (I) is broken MOTIVE FORCE = RESISTANT POWER due to an increase (or decrease) of this, the pressure on (32) (or 33), of Fig. **1**, increases (or decreases) and it moves to the left (or right), acts in (34), of Fig. **1**, in (3), which moves away (or closer) (4) from/to the centre to the point where the equation (I) is re-established due to the gearing down (or gearing up) of the rotation of (1).

The fundament is that supposing that (5) injects the same constant fluid volume per time unit, when moving away (or closer) (4), such volume makes (1) turn slower (or faster), as it has to affect a bigger (or smaller) circumference per time unit [more (or less) the bigger (or the smaller) the radium of the disc is], but, at the same time, the leverage increases (or decreases) because the lever (the radium of the disc) increases (or decreases). Therefore, another moment equivalent to the one there was before the equation (I) was broken, is obtained; which decreases (or increases) the rotation, increasing it (or decreasing it) in leverage, as shown in Figs. from **A** to **H.**

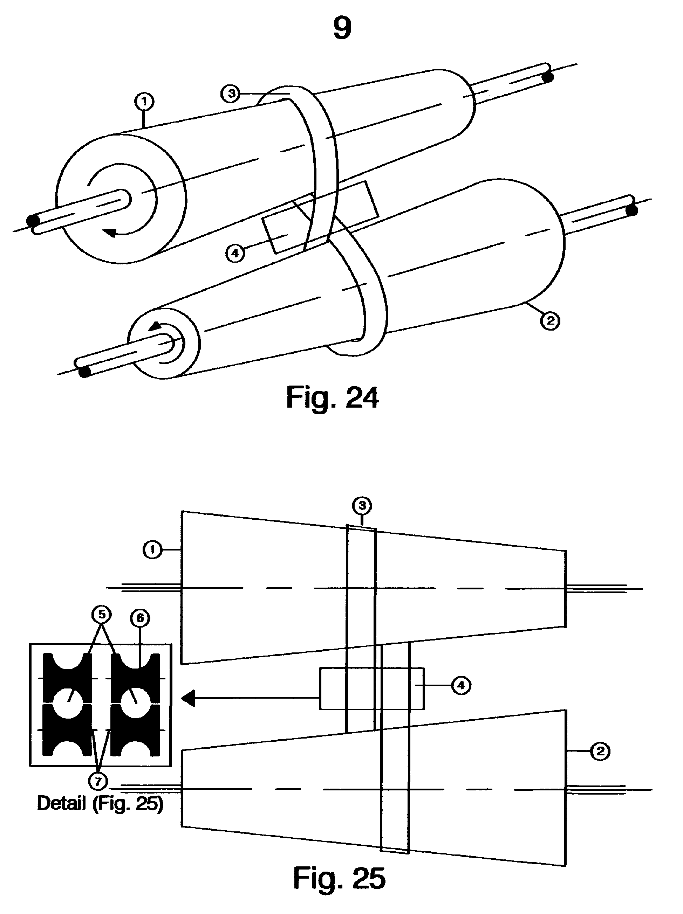

**Realisation on Figs. 22 and 23, where the connection (5) is hydraulic.**

Correspondence with Fig. **1**:

(1) with (3). (2) with (2), (9) with (5) and (6) with (6)-(7).

The MOTIVE FORCE is transmitted through the fluid (10), coming from the pump and the tank, through the canals (5), and affects the bladed surface of (1), making it turn, which, at the same time, sends it over the bladed surface of (2), making it turn, and it continues through (4) towards the APPLICATION.

If the equation (**I**) MOTIVE FORCE = RESISTANT POWER is broken due to an increase (or decrease) of this, the pressure on (32) (or 33), of Fig. **1**, increases (or decreases) and it moves to the left (or right), operates (34), of Fig. **1,** in (9), which moves (6) to the left (or right) to the point where the equation (I) is established due to the gearing down (or gearing up) of the rotation of (1).

The fundament is that supposing that (1) injects the same constant fluid volume per time unit, when moving (6) to the left (or right), such volume makes (2) turn slower (or master), since it has to affect a bigger (or smaller) circumference per time unit [more (or less) the bigger (or smaller) the radium of the cone is], but, at the same time, the leverage increases (or decreases) since the lever (cone's radium) increases (or decreases). Therefore, another moment equivalent to the one there was before the equation (I) was broken, is obtained; which decreases (or increases) the rotation, which increases (or decreases) in leverage, as seen in Figs. from **A** to **H**.

**Realisation on Figs. 24 and 25.**

Correspondences with Fig **1**:

(1) with (3), (2) with (2), (3) with (5) and (4) with (6)-(7).

The MOTIVE FORCE is transmitted through (1) and through (3) to (2) and from this one to the APPLICATION

If the equation (I) MOTIVE FORCE = RESISTANT POWER is broken due to an increase (or decrease) of this, the pressure on (32) (or, 33), of Fig. 1, increases (or decreases) and it moves to the left (or right), operates on (34), of Fig. 1, in (4), which moves to the right (or left) to the point where the equation (1) is obtained due to the gearing down (or gearing up) of the rotation of (1).

The fundament is that when moving (3) to the right (or left), (2) decreases (or increases) its rotation, and the torsion effort of (I) affects, through (3), in less (or more) than a turn (circumference) of (2); but, at the same time, the lever (radio of (1) decreases (or increases) and the lever (radium of (2) increases (or decreases). Therefore, another moment equivalent to the one before the equation (I) was broken is obtained; which decreases (or increases) the rotation, increasing it (or decreasing it) in leverage, as seen in Figs. from **A** to **H.**

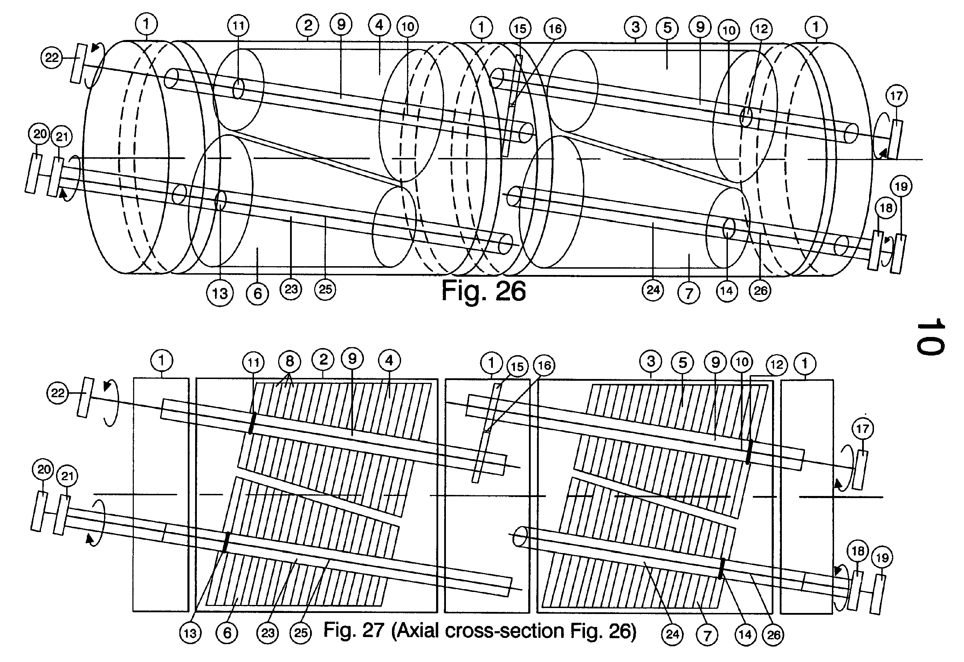

**Realisation on Figs. 26 and 27.**

Correspondences to Fig. **1**:

(7) with (3), (6) with (2), (11)-(12)-(13)-(14) with (5), (17)-(18) with (6) and (21) with (7).

The MOTIVE FORCE is transmitted through (18)-(24)-(14)-(7)-(5)-(12)-(9)-(15)-(16)-(9)-(4)-(11)-(6)-(23)-(13)-(21) and continues towards the APPLICATION.

If the equation (I) is broken MOTIVE FORCE = RESISTANT POWER due to an increase (or decrease) of this, the pressure on (32) (or 33), of Fig. 1, increases (or decreases) and moves to the left (or right), operating on (34), of 1, in (17)-(19) and (20)-(22), which move (12)-(14) and (11)-(13) to the right (or left) to the places where the equation (I) is re-established due to the gearing down process (or gearing up) of the turns of (24) and (9) on the left.

The fundament is that when moving (12)-(14) and (11)-(13) to the right (or left), (9 right) and (23) their rotation decreases (or increases), and the torsion effort of (24) and (9 left) affect less (or more) than a turn (circumference) of (5) and (6); but, at the same time, the leverage lever (radium of (7) and (4) decreases (or increases) and the leverage lever (radium of (5) and (6) increases (or decreases)

Therefore, another moment equivalent to the one there was before the equation (I) was broken is obtained; which decreases (or increases) the rotation, increasing it (or decreasing it) in leverage, as seen in Figs. from **A** to **H**.

**Realisation on Figs. 28, 29 and 30.**

Correspondences to Fig. **1**:

(1) with (3), (5) with (2), (6) with (5) and extremes of (4) with (6) y (7). The MOTIVE FORCE is transmitted through (1)-(2)-(5) and continues toward the APPLICATION.

If the equation (I) is broken MOTIVE FORCE = RESISTANT FORCE due to an increase (or decrease) of this, the pressure on (32) (or 33), of Fig. **1**, increases (or decreases) and moves to the left (or right), operating on (34), of Fig. **1,** in the extremes of (4), which moves (6) to the left (or right) to the stop where the equation (I) is re-established due to the gearing down process (or gearing up) of the rotation (1).

The fundament is that when moving (6) to the left (or right), (5) decreases (or increases) its rotation, and the torsion effort of (1) affects in less (or more) than a turn (circumference) of (5); but, at the same time, the lever (radium of (1) decreases (or increases) and the lever (radium of (5) increases (or decreases). Therefore, another equivalent to the one that there was before the equation (I) was broken; which decreases (or increases) the rotation, increasing it (or decreasing it) in leverage, as seen in Figs. from **A** to **H.**

**Realisation on Fig. 31.**

THIS REALISATION DIFFERS FROM THE REST IN TWO ASPECTS:

1. It has its best application in cases where the APPLICATION of the POWER SOURCE has as object the propulsion of vehicles such as cycles or velocipedes, motorcycles and any other power-tools.

2. The TRANSMISSION (1) of the scheme of Fig. 1 is reduced to the ADAPTOR (II) and to the REGULATOR (III), but with the particularity that this (III) is simplified in its two versions: **A** and **B,** the mechanical version (Figs **34** and **35**) and the hydraulic version (Fig. **36**), respectively.

**A. Mechanical Version Fig. 31** (detailed on Figs. **34** and **35**).

Correspondences to Fig, 1:

(1) with (3), (21) with (2), (13) with (5), (14) with (7) and (19)-(20) with (6).

If the equation (I) is broken MOTIVE FORCE = RESISTANT POWER due to an increase of this in (1), the spring (2), of Fig. **34**, can not continue being symbiotic and synchronised with (1) and (3), (2) is compressed (when the motive force increases in order to overcome the increase of the resistant power) and (1) and (3) slide among them in the direction indicated by the arrows in Fig. 35, and (3), by the action of sphere (6), it moves axially concerning (1), according to quadrants (a) and (d) of Fig. 35. This movement of (3) acts in the extreme of the rocker arm shaft (15), which presses with the other extreme and stops the rotation of (12), synchronised in rotation with (1), *screwing* (13) to the right until the equation (I) is re-established

If the equation (I) is broken by the decrease of the RESISTANT POWER, 0 (zero) is no longer the result of both forces operating on (1) and (4), since now the same two forces do not operate (thick arrows) on (1) and (4), but the *thick* and the *fine* one, respectively, according to quadrants (b) and (c) of Fig. **35**. This makes the resort (2), of Fig. 34, distend (when the resistant power decreases, since the forces that compress the extremes are smaller) and (1) and (4), due to the action of the spring (2) slide, and due to the action of the sphere (5), (4) moves axially concerning (1). This movement of (4) operates in the extreme of the rocker arm shaft (18), which presses the other extreme and moves the pinion (19) until it attaches it to (20), in a way that (4) transmits its rotation to (12) through (17)-(20)-(19), making (12) turn in the same direction as (4), but faster than (4), and screwing this way to (13) to the left until the equation (I) is re-established

**Explanatory notes:**

**a.** The crown wheel (4) is permanently engaged to the pinion (20), which freely turns on (12), by means of the pinions (17).

**b.** Fig 35 shows the balance of the equation (I) MOTIVE FORCE = RESISTANT POWER, where spheres (5) and (6) do not interact with (1)-(3) or (1)-(4), characterised by the forces that operate on (1) and (3) and (1) and (4) are cancelled among them, and (1) and (3) and (1) and (4) turn in a symbiotic and synchronised way.

**c.** What Fig 35 tries to express is that when the balance (I) is broken, due to the fact that the force operates on (1) it increases or decreases depending on the ones operating on (3) or (4), the fact is that (1) and (3) and (1) and (4) slide among them in the direction of the arrows; sphere (6) moves (3) concerning (1), and sphere (5) moves (4) concerning (1), respectively.

**d.** Quadrants (a) and (d), and quadrants (b) and (c) correspond to the section of (1)-(3)-(6), and (1)-(4)-(5), respectively, situated, **(a)-(b),** and **(c)-(d)** under the screw-axle (12) of Fig 31.

**B. Hydraulic version of Fig. 31** (explained on Fig. **36**).

In this realisation, Fig. **31** is reduced to only three elements:

(1), (2), (12), (13), (14), (21) and (22), and (7), (8), (9), (10) and (11); the rest is eliminated. In addition, (11) of Fig. **31,** which is symbiotic with (7) of Fig. **36,** and (1) of Fig. **31,** which is symbiotic with (8) of Fig. **36,** connect hydraulically among them; and, in the same way, (22) of Fig. **31,** which is symbiotic with (9) of Fig. **36,** and the APPLICATION, which is symbiotic with (10) of Fig. **36.**

The MOTIVE FORCE is transmitted through (7)-(8)-(9)-(10)-(11) of Fig. **31**-[(7) of Fig. **36-**fluid-(8) of Fig. **36**]-(1)-(13)-through the adequate small wheel of (2)-(21)-(22) of Fig. **31**-[(9) of Fig. **36**-fluid-(10) of Fig. **36**], and it continues to the APPLICATION.

If the equation (I) MOTIVE FORCE = RESISTANT POWER is broken due to an increase (or decrease) of this in (10) of Fig. **36,** the pressure on (17) of Fig. **36** increases (or decreases), moving (4) of Fig. **36** to the right (or left), operating (3) of Fig. **36** on (5) of Fig. **36,** which moves, making (6) turn, symbiotic with (12) of Fig. 31, in the opposite direction to the clockwise direction (or in the clockwise direction), with what (12) of Fig. **31** *screwed to* (13) to the right (or left) until it re-establishes the equation (I).

The fundament is similar to the one of the realisation on Figs. **28, 29** and **30.**

**Realisation on Fig. 37** (and 38, 39, 40).
Correspondences with Fig. **1**:

(1) with (3), (22) with (2), [(7)-(8)-(16)-(19)] with (5), and [(23)-(24)] with [(7)-(8)].

The MOTIVE FORCE is transmitted through (1)-(7)-(4)-(2)-(3)-(6)-(8)-(9)-(10)-(12)-(13)-(16)-(17)-(14)-(15)-(20)-(19)-(22), and continues towards the APPLICATION.

If the equation (I) MOTIVE FORCE = RESISTANT POWER is broken due to an increase (or decrease) of this, the pressure on (32), of Fig. **1**, increases (or decreases) and moves to the left (or right), operating (34) of Fig. **1** on (24), which turns in the clockwise direction (or the opposite), moving (1) to the right (or left) until it re-establishes the equation (I) by the gearing down (or gearing up) of the rotation of (1). increases) its rotation; but, at the same time, the lever (radium of (4) decreases (or increase) and the lever (radium of (6) increases (or decreases). Therefore, another moment equivalent to the one there was before the equation (I) was broken, is obtained; which decreases (or increases) the rotation, increasing it (or decreasing it) in leverage, as seen in Figs. from **A** to **H.**
In a similar way for (16)-(19 when they are moved to the left (or right).

**Realisation on Figs. 41 and 42.**
Correspondences to Fig. **1**:

(1) with (3), (3) with (2), (4) with (5) and (7) with (6)-(7).

The MOTIVE FORCE transmits through the axle of (2)-(2)-(4)-(1)-(3)-axle of (3), and continues towards the APPLICATION.

If the equation (I) MOTIVE FORCE = RESISTANT POWER is broken due to an increase (or decrease) of this, the pressure on (32) of Fig. **1** increases (or decreases) and moves to the left (or right), operating (34), of Fig. **1**, on (7), which turns in the clockwise direction (or opposite), moving (4) to the left (or right) until it re-establishes the equation (I) by gearing down (or gearing up) of the rotation of (1)-(2).

The fundament is similar to the one of the realisation on Figs. **28, 29** and **30,** since the *cone* (2) is also here, connecting with the cone (3) by means of the small wheels (1).

**INDUSTRIAL APPLICATION'S WAY**

The present invention, due to its object (exposed in its section) and due to the technical practical way to achieve it, is susceptible of industrial application in the TRANSMISSION of all POWER SOURCE to a SPECIFIC APPLICATION. Specially, in the propulsion of vehicles such as cycles, velocipedes and automobiles, and any other power-tools.

**Claims**

**1.** It is claimed as "a new and own invention" the property and exclusive exploitation of a **"Automatic POWER CONVERTER, which with the minimum energy consumption possible and with a continuous, progressive and instantaneous adaptation, keeps constant the equation between the power produced by an ENERGY SOURCE and the required power at all times by a SPECIFIC APPLICATION."**

In every application of a POWER SOURCE in order to achieve a SPECIFIC APPLICATION, two obstacles are to be found:

1°. Exceptionally, a POWER SOURCE can be applied DIRECTLY to a SPECIFIC APPLICATION.

2°. Frequently, the POWER required by a SPECIFIC APPLICATION is VARIABLE and UNPREDICTABLE in time.

Consequently, in order to overcome the two obstacles in the use of a POWER SOURCE in order to get a SPECIFIC APPLICATION, the following are used:

• In the FIRST case, a device is INSERTED between the POWER SOURCE and the SPECIFIC APPLICATION: the so-called **TRANSMISSION**.

• In the SECOND case, also, a device which tries to ADEQUATE and REGULATE the entrance of the POWER SOURCE, in its exit to the needs required by the SPECIFIC APPLICATION: an **ADAPTOR** complementing the TRANSMISSION.

Summary:

| POWER SOURCE OR POWER | TRANSMISSION ADAPTOR | SPECIFIC APPLICATION |
|---|---|---|
| River (potential energy) | Mill's vertical wheel blade | Move the mill's stone |
| River (kinetic energy) | Mill's hydraulic wheel | Move the mill's stone |
| Wind (kinetic energy) | Mill's wind blades | Move the mill's stone |
| MOTIVE FORCE | POWER CONVERTER | RESISTANT POWER |

Once the problem is set and having the devices to use, it is time now to explain how to solve it, according to these two conditions:

1ª. OPTIMISATION in the relationship POWER SOURCE / SPECIFIC APPLICATION in the economic sense.

2ª. Comfort / automatism.

Transmission, when the needs required by the SPECIFIC APPLICATION are VARIABLE and UNPREDICTABLE in time, apart from inserted connectors, are the devices the ones ADAPTING the POWER SOURCE to the APPLICATION modifying the rotation

relationship between them, by means of an ADAPTOR; that is, between the rotation that it received and the one it transmits.

Depending on the input/output rotation relationship being fixed or variable, the transmissions can be:

• **CONSTANT** when connecting the POWER SOURCE and the SPECIFIC APPLICATION not varying the input/output relationship.

• **VARIABLE** if the input/output rotation relationship is unpredictable variable.

At the same time, the VARIABLE ones, depending on the way to vary the input/output relationship can be:

• **Variable WITH DISCRETE INTERVALS**, which produce fixed rotation connections with no movement but they do not reach an OPTIMUM relationship due to the efficiency loss and superfluous waste of energy, due to the fact that the input/output adaptation is not continuous, progressive and instantaneous.

• **Variable WITHOUT DISCRETE INTERVALS,** which produces an OPTIMUM input/output relationship; but it might have movements.

The **"leverage conversion"** is achieved with the leverage converters, mechanical or hydraulic. The first ones gear down the engine by gears, moveable or planetary, at discrete intervals; which make them far from reaching the optimum rotation relationship (input / output), with a loss of motive efficiency and superfluous waste of energy, when adapting the leverages by "steps" and in a continuous way. The hydraulic converters, with their advantages and comfort, lack of low amplitude leverage variation (2 to 3 in gearing down), of important liquid heating and bigger consumption (around 20% or over), therefore they require the addition of a planetary gearbox and a powerful engine, respectively.

There are few devices of variable transmission with no discrete intervals, but they are not very sensitive in the detection and answer of the variation of the relationship of engine/resistance so the equality between both leverages is not instantaneous and continuous. Apart from that, they found their regulation exclusively in the function of the relationship of the driving shaft's speed/ transmission shaft's speed. It can be said that they are mixed, with mechanical connection and they do not contemplate the pure hydraulic option which is more elastic, versatile and rapid precise answer.

The present invention refers to a TRANSMISSION (I) which comprehends automatic devices [(CONNECTION ADAPTOR (II), CONNECTION REGULATOR (III), REGULATOR TO PUT DOWN THE CLUTCH (IV) "BRAKE" AND ANTI-STALL MOTOR DEVICE (V)], which functioning in a complementary and synchronising way, apart from solving the two obstacles that every application presents coming from a POWER SOURCE in order to achieve a SPECIFIC APPLICATION:

1. It keeps constant the equation MOTIVE FORCE = RESISTANT POWER.
2. It converts, in an automatic instantaneous way, the MOTIVE FORCE which
received from the POWER SOURCE, by means of gearing down and gearing up in the rotation input/output relationship without wasting any power or energy, in exactly the same OUTPUT POWER strictly required by the SPECIFIC APPLICATION at all times.
3. A variation of leverage of high amplitude.
4. Optimisation of the motive performance, when allowing the engine to always work at regime speeds
5. Comfort due to total automatisation.

This OPTIMUM relationship between POWER SOURCE / SPECIFIC APPLICATION, being adjusted to both concepts, the economic and the comfort one, object of this invention, is possible with the AUTOMATIC CONNECTION REGULATOR (III), which, in function, teamed and synchronised, of the relationships pressure plus rotation speed (that is, POWER):

• Motive pressure (8) (VM = MOTOR LEVERAGE) / resistant pressure (9) (VR = RESULTANT LEVERAGE)
• Driving shaft's speeds (14) / resistant shaft (15),produces the adequate connection every moment in the AUTOMATIC CONNECTION ADAPTOR (II) to keep constant the equation MOTIVE POWER = RESISTANT POWER, according to the different ways of realisation.

**CHARACTERISING PART**

1. A "POWER CONVERTER, automatic, which, with the minimum energy consumption and with a continuous, progressive and instantaneous adaptation keeps constants the equation between a POWER SOURCE and the power required every moment by a SPECIFIC APPLICATION" or TRANSMISSION (I), which comprehends four automatic devices [a CONNECTION ADAPTOR (II), a CONNECTION REGULATOR (III), a CLUTCH REGULATOR (IV) and a "BRAKE" AND MOTOR ANTI-STALL DEVICE (V)], formed by a system, **characterised** for maintaining constant the equation MOTIVE FORCE = RESISTANT POWER; for adapting and transmitting, with the minimum energy consumption possible, only the MINIMUM MOTIVE FORCE required by the SPECIFIC APPLICATION every moment; for having a leverage variation of high amplitude, for optimising the motive performance when allowing the engine to always work at the same regime speed; great comfort for total automatism.
2. A "POWER CONVERTER... (according to the title)" or procedure to achieve the characterising part according to claim 1, **characterised** since to the engine ticking over device (44) keeps (50) the clutch released by the action of (34).

When accelerating, (40) cuts (34) in (41), (51) overcoming (44), and (50) transmits the POWER SOURCE, due to the hydraulic connection (8), the ADAPTOR (II) and the connection (9), to the SPECIFIC APPLICATION.

At the beginning of the acceleration process, pressure (8) and (14), due to the difference calculated from (17) and (18) [it is meant to retard the opening of (23)], do not go through (23) to (33), but through (22) to affect (32) and so create strong "repetition": (34) operates on (7), and (5) is moved to "connect" (2) and (3) in a place where it creates elevated power in order to overcome inertia.

Therefore, when the ascending pressure (9) and (15) overcome (19), pressures (a) [(8)-(14)] and [(9)-(15)] affect (33) and (32), respectively. And from now, any difference between the pressure (a) affecting (32) and (33), makes (34) operates on (7) or (8) to move (5) to the "connection" spot between (2) and (3) where the equation MOTIVE FORCE = RESISTANT FORCE is achieved; keeping constant the equation of pressure on (32) and (33) and the equation of the two FORCES, since both equations are interdependent and tend to generate themselves mutually.

**(a)** These pressures, [(8)-(14)] and [(9)- (15)], are directly proportional to the motor rotation of the driving shaft and to the motive force, as well as to the transmission shaft and the resistant force, respectively.

3. A "POWER CONVERTER... (according to the title)" or AUTOMATIC CONNECTION REGULATOR (III), according to claims 1 and 2, which comprehend valves, tubes, a tank (34) with fluid at pressure, two cylindrical boxes, (6) and (7), symbiotic with (4), two empty cylinders, (8) and (9), symbiotic with (3) and (4), two cylindrical boxes, (14) and (15), symbiotic with the driving shaft and the transmission shaft, respectively; and **characterised** because it detects and compares the forces, motive and resistant at the entrance and exit of the ADAPTOR (II), and, depending on the slightest variation between both forces, it acts and modifies the interaction of the elements of the ADAPTOR and it produces the connection at the adequate spot by means of (5) to keep constant and continuously the same the input/output FORCES: MOTIVE FORCE = RESISTANT POWER (I). Inside the equilibrium or equation (I) there is another equilibrium: the pressure equation Mm x VM = Mr x VR (II) which the MOTIVE FORCE and the RESISTANT POWER exert in the extremes of the valve (32) and (33), through (8) plus (14) plus (9) plus (15), respectively. In this way, whilst the equation (I) is maintained, equation (II) will be maintained, with the centred valve and being closed (26), (27), (30) and (31). This inter- relation and reciprocal interdependency between (I) and (II) is used, by means of the reciprocal interaction between (I) and (II), to keep constant the EQUATION (I), which is the NUCLEUS and FINALITY of what is pretended.
It is also susceptible to work electronically substituting almost all its components, specially the components of detection (8)-(9) and (14)-(15), for electronic elements.

4. A "POWER CONVERTER... (according to the title)" or AUTOMATIC CONNECTION ADAPTOR (II), according to claims 1 to 3, which comprehends cylinders, discs, cones, etc., depending on the different concrete ways of realisation, arranged in different combinations inside a housing (1), "connected" between then by other elements, which interact physically, according to the concrete ways of realisation, whichreducing the engine effort by means of gearing down, be able to adapt the MOTIVE FORCE to the RESISTANT FORCE and transmit when exiting the same power it receives.

The screw-axle (4), ruled by the REGULATOR (III), is likely to be substituted for a hydraulic-telescopic device to command the connector (5).

5. A "POWER CONVERTER... (according to the title)" or device, according to claims 1 to 4, which concretes the ADAPTOR's (II) particular way of realisation, **characterised by** an empty cone (3) symbiotic with the axle (16), which is obliged to turn around the motive fluid coming out of the orifices (4) from tubes (2), which, ruled by the REGULATOR (III) when the equation (I) is broken, slide through the generator set of (3), in either direction, towards the adequate spot, increasing or decreasing the lever and obtaining another moment equivalent to the one there was before the equation (I) was broken, which is re-established through the gearing down process.

6. A "POWER CONVERTER... (according to the title)" or device, according to claims 1 to 5, which concretes the ADAPTOR's (II) particular way of realisation, **characterised by** a cone body (1) symbiotic with axle (11), which is obliged to turn due to the action of the motive fluid coming out of (7) through (3), to affect the interior bladed surface of (1). When the equation (I) is broken, cylinder (4) with its chamber (7), ruled by the REGULATOR (III), moves in either direction, injecting the motive fluid through adequate canal (3), increasing or decreasing the lever (cone's radium) and obtaining another moment equivalent to the one there was before the equation (I) was broken (I), which is re-established by means of gearing down.

7. A "POWER CONVERTER... (according to the title)" or device, according to claims 1 to 6, which concretes the ADAPTOR's (II) particular way of realisation, **characterised by** two straight cylinders, whose bases, (7) and (8), symbiotic with every leverage through a central axle, (1) and (2), and together by extensible blades, (5) and (4), ruled by the REGULATOR (III), move inside their respective cylinder, moving closer or further alternative and simultaneously between them [as long as the cylinders of a leverage move closer (or further) the ones of the other leverage move furthers (or closer) towards the other]. The motive force is transmitted, through the injected fluid, from (1)-(5)-(7) to (4)-(6)-(2), the rotation speeds being of (1) and (2) inverse to the respective separation of bases (7) and (6), since due to the combination of Bernoulli's (and Pascal's) theorems [in the narrowest section the fluid's speed increases and its pressure (power) decreases, and in the widest section the contrary occurs] it is possible to obtain another moment equivalent which keeps the equation (I); which decreases (or increases) the rotation, which increases (or decreases) the leverage.

8. A "POWER CONVERTER... (according to the title)" or device, according to claims 1 to 7, which concretes the ADAPTOR's (II) particular way of realisation, **characterised by** two axles (22) and (23), with blades (1) symbiotic with its axles, rigid and articulated, which rotate inside both cylinders that are communicated; with the particularity that these and those, ruled as a whole by the REGULATOR (III), increase (or decrease), alternative and simultaneously its radiums [as long as one increases (or decreases) the other one decreases (or increases)]. The motive force is transmitted from (22) through the fluid which its blades injects to the blades of (23), the rotation speeds being of (22) and (23) inverse to the respective radiums of their blades and cylinders, since the fluid's volume moving the blades of (22) affect a bigger (or smaller) circumference; but, at the same time, the leverage increases (or decrease) because the lever (the radium of the blades and respective cylinder) increases (or decreases) and so another equivalent moment is obtain, which maintains the equation (I); which decreases (or increases) the rotation, which increases (or decreases) the leverage.

9. A "POWER CONVERTER... (according to the title)" or device, according to claims 1 to 8, which concretes the ADAPTOR's (II) particular way of realisation, **characterised by** two axle-cylinders, (5) and (1), attached inside both pairs of bladed cylinders inside, leverage (7) and leverage (3), with which they turn synchronised, and whose blades are entwined with the ones of (5) and (1). The motive force is transmitted from (5) to (1) through the fluid that (5) injects through the canal left by the separation of leverage (7) and affects (1) through the canal left by the separation of leverage (3), the rotation speeds being (5) and (1) inverse to the canals, since the flow or fluid's volume going through both canals is the same. When the equation (I) is broken, the REGULATOR (III) moves away or comes closer, simultaneously,among the cylinders or each leverage, (7) and (3), in the adequate proportion which re-establishes the equation (I).

10. A "POWER CONVERTER, (according to the title)" or device, according to claims 1 to 9, which concretes the ADAPTOR's (II) particular way of realisation, **characterised by** two bladed cylinders, (1) and (2), communicated between them through the variable canal delimiting four sliding pieces, with a "C" form, (5)-(6) and (7)-(8), which, together with the inserted piece (9), totally cover cylinders (1) and (2). Pieces (5)-(6) and (7)-(8), ruled by the REGULATOR (III), slide, moving the leverage (7)-(8) of a cylinder closer or further, and moving the leverage (5)-(6) of another cylinder closer or further, simultaneously, between among them. The motive force is transmitted, by the fluid injected from (2) to (1); the rotation speeds being inverse to the respective separations between (7) and (8), and (5) and (6); since the combination of Bernoulli's (and Pascal's) theorems [in the narrowest section the rotation speed increases and its pressure (force) decreases, and in the widest section the contrary occurs] another equivalent moment is obtained keeping the equation (I); which decreases (or increases) the rotation, which increases (or decreases) the leverage.

11. A "POWER CONVERTER (according to the title)" or device, according to claims 1 to 10, which concretes the ADAPTOR's (III) particular way of realisation, **characterised by** a bladed cone (1) which transmits the motive force which injects to (3), and this one, ruled by (III), moves in one or other direction parallel to the generator set of (1) in order to increase or decrease the lever (cone's radium) and obtain another moment equivalent to the one there was before the equation (I) was broken, which re-establishes by a gearing down process.

12. A "POWER CONVERTER... (according to the title)" or device, according to claims 1 to 11, which concretes the ADAPTOR's (II) particular way or realisation, characterise by a disc (1) which is bladed in one of its bases, which transmits the motive force injected by the two (5), equidistant from the centre of (1), and these being ruled by (III), move away or come closer from/to the centre of (1) in order to increase or decrease the lever (disc's radium) and obtain another moment equivalent to the one there was before the equation (I) was broken, which is re-established by the gearing down process.

13. A "POWER CONVERTER... (according to the title)" or device, according to claims 1 to 12, which concretes the ADAPTOR's (II) particular way or realisation, **characterised by** two cones, (1) and (2), bladed in their surface and surrounded by a casing formed by multiple canals (5), with an opening (7) according to the generator set of (1) through which the fluid's pressure enters in the (5), and which pushed by the motive force of (1) makes (2) turn. When the equation (I) is broken, the REGULATOR (III) moves (6) to the adequate spot, closing the circuit around (1) and (2), by modification of the levers (both cones' radiums) and by gearing down, another equivalent moment re-establishing the equation (I) is obtained.

14. A "POWER CONVERTER... (according to the title)" or device, according to claims 1 to 13, which concretes the ADAPTOR's (II) particular way of realisation, **characterised by** a cone (1), which transmits its motive rotation to cone (2) through a strap (3). When the equation (I) is broken, the REGULATOR (III) operates on (4) to move (3) to the adequate spot, modifying the levers (both cones' radiums) and by a gearing down process, another equivalent moment re-establishing the equation (I) is obtained (I).

15. A "POWER CONVERTER... (according to the title)" or device, according to claims 1 to 14, which concretes the ADAPTOR's (II) particular way of realisation, **characterised by** two cylinders, (3) and (2), which turn pushed by the small wheel cones (7)-(5) y (4)-(6), respectively, engaged efficiently in the inner side of the cylinders. Cones (7)-(5) y (4)-(6) turn on correspondent axles, in whose interior a piece moves, (14), (12), (11) and (13), activated by (III) to connect each axle with the adequate small wheel. When the equation (I) breaks, (III) operates on connections (14), (12), (11) and (13) taking them to the adequate spots, where due to the modification of the levers (adequate small wheels) and by the gearing down, another equivalent force moment is obtained, which re-establishes the equation (I).

16. A "POWER CONVERTER... (according to the title)" or device, according to claims I to 15, which concretes in the ADAPTOR (II) particular way of realisation, **characterised by** two cones, (1) and (5), connected between them by one of the small wheels (the adequate one) of cylinder (2) inserted and got through by cylinder (3), through whose interior the piece ruled by (4) moves, connecting the adequate wheel. When the equation (I) is broken, (III) operates on (4) in order to connect (1) and (5) by means of the adequate small wheel, so that when modifying the levers (cones'radiums) and by the gearing down, another equivalent force moment is obtained, which re-establishes the equation (I).

17. A "POWER CONVERTER... (according to the title)" or device, according to claims 1 to 16, which connects the ADAPTOR (I) particular way of realisation, **characterised by** a cone (21) engaged to cone (2), this being formed by the small wheels in the reel (1), whose cylinder contains spheres with which the connector (13) connects the power source with (21) by means of the adequate small wheel; two discs (3) and (4), connected with (1) through springs, which with the help of some spheres or rollers and some rocker arm shafts, substitute the function of the REGULATOR (III), having its best application in the propulsion of cycles, motorbikes and motorcycles:So when the resistance increases, the springs are compressed over a calculated tope and by the action of spheres (6), (3) it is moved and presses the rocker arm shafts (15), which immobilize (14) and moves (13) to the right, re-establishing the equation (I) by the consecution of other equivalent force moments through the modification of the levers (cones radiums) and the gearing down; and, in the same way, when, the resistance decreases, the springs connecting (4) with (1) are loosened and, by the action of spheres (5), (4) it is separated and it presses the rocker arm shafts (18), which attach (19) with (20) and moves the connector (13) to the left up to the point where the equation (I) is re-establised.

18. A "POWER CONVERTER... (according to the title)" or device, according to claims 1 to 17, which connects the ADAPTOR's (II) particular way of realisation, **characterised** since, this being a variant of claim 17 and with the same application, consists of a reel (1) which contains a cone of small wheels (2) engaged with cone (21), a screw-axle (12), a nut-cylinder (13) and a disc (14), symbiotic with (12), on which a REGULATOR operates simplifying that it comprehends a pump (2) which comprises the fluid in (3), a valve of sliding (4) in whose extreme the motive force's pressure operates, (7)-(18)-(8), or the resistant pressure, (10)-(17)-(9), moving it to either side and allowing (3) to operate on (5) and this on (12) in order to move (13) to connect the adequate small wheel as to re-establish the equation (I).

19. A "POWER CONVERTER... (according to the title)" or device, according to claims 1 to 18, which concrete in the ADAPTOR's (II) particular realisation way, **characterised by** two concave discs, (2) and (3), connected between them by two small wheel cones, (4) and (6), which gather through (7) and transmit through (8) the motive force which the axle with rack (1) supplies; connecting all with the other two concaves discs, (14) and (15), which are connected between them by two small-wheel cones, (17) and (20), which gather through (16) and transmit through (19) the power to the axle (24), engaging with the racks which, ruled by the REGULATOR (III), moves rollers (7), (8), (16) and (19) in axial direction through inside (4), (6), (17) and (20) to connect the adequate small wheel and so, by means of gearing down and the modification of the levers (cones' radiums) obtain another moment equivalent of force, which re-establishes the equation (I).

20. A "POWER CONVERTOR... (according to the title)" or device, according to claims 1 to 19, which connect in the ADAPTOR's realisation particular way (II), **characterised by** a cone (3), symbiotic with the transmission shaft, connected with another cone of small wheels (1) where there is another deformed cone (2) and symbiotic with the motor shaft (result from dividing a cone into two halves sliding them, according to the direction of their diameter, apart from a radium). The (1) and (2) are connected by two sets of rollers (4), ruled by the REGULATOR (III), in a way that, when the equation (I) is broken, the (4) move to connect (2) and (3) through the adequate small wheels of (1) and, by modifying the levers (cones' radiums) and by gearing down, obtain another force moment equivalent, which re-establishes the equation (I).

2

Fig. 5

Fig. 6 (C-D cross-section)

Fig. 7

(A-B transversal cross-section)

Fig. 8

Fig. 9
(Axial cross-section Fig. 8)

Fig. 10 (A-B cross-section)

Detail of ② (Figs. 8 y 9)

4

Fig. 11

Fig. 13 (A-B cros.-section)

Fig. 14 ( C-D transversal cross-section)

Fig. 12

**5**

Fig. 15

Fig. 15a

Fig. 15b

Fig. 16

Fig. 16 a

Fig. 16 c

Fig. 16 b

6

Fig. 17

Fig. 19 ( C-D cross-section)

Fig. 18 (A-B cross-section)

Fig. 20

Fig. 21

Fig. 23 ( Fig. 22 transversal section)

Fig. 22

9

## Fig. 24

## Detail (Fig. 25)

## Fig. 25

10

Fig. 26

Fig. 27 (Axial cross-section Fig. 26)

Fig. 28

Fig. 30
(Detail of 4 in Fig. 28)

Fig. 29
(Transversal cross-section of
2:3:4:6 in Fig. 28)

## 12

Fig. 31

Extended detail of ⑯

13

Fig. 36

Fig. 34
(Connecctions' detail ①-③-⑥ & ①-④-⑤ Fig. 31)

Fig. 33

Fig. 32

Fig. 35
(Cross-sections: ⓐ & ⓑ plan A; ⓒ & ⓓ plan B)

14

Fig. 37

Fig. 38
(Detail of 7, 8, 16 & 19 Fig. 37)

Fig. 39
(Detail of 11 and 18)

Fig. 40
( Transversal cross-section of 7 and disk )

Fig. 43
(A-B cross-section)

Fig. 44
(Extended detail)

Fig. 41

Fig. 42 (Axial cross-section Fig. 41)

16

Fig. A

Fig. B

Fig. C

Fig. D

Fig. C+D

# 17

Fig. E

Fig. F

Fig. E+F

18

Fig. G

19

$$\vec{V}R = \begin{cases} \vec{V_n} \\ \vec{V_{n-1}} \\ \vec{V_{n-2}} \\ \vec{V_2} \\ \vec{V_1} \\ \vec{V_0} \end{cases}$$

$$\vec{M}M$$

① ②

A $\vec{M}\,\vec{M}\,\vec{M}\,\vec{M}$ ................................. $\vec{M}\,\vec{M}\,\vec{M}\,\vec{M}$ B

E | | F

L | | M

G | K | H

C $\vec{M_n}$ $\vec{M_{n-1}}$ $\vec{M_{n-2}}$ ........................ J $\vec{M_2}$ $\vec{M_1}$ $\vec{M_0}$ D P

$$\vec{M}R$$

The motor moment is geared up by means of gearing down the motor rotation | The moment is geared up

Fig. H